# EUROPÄISCHE PATENTANMELDUNG

(11) **EP 4 321 378 A2**
(43) Veröffentlichungstag der Anmeldung: **14.02.2024**
(21) Anmeldenummer: 23187329.0
(22) Anmeldetag: 24.07.2023
(51) Int. Cl.: B60N 2/68, B60N 2/015, B60N 2/14, B60N 2/30

(54) **RAHMEN FÜR EINEN FAHRZEUGSITZ UND FAHRZEUGSITZ MIT EINEM SELBIGEN**

(30) Priorität: 22.07.2022 DE 202022104164 U
(71) Anmelder: Bruns Holding GmbH & Co. KG, 26689 Apen (DE)
(72) Erfinder: Bruns, Gerit, 26160 Bad Zwischenahn (DE)
(74) Vertreter: Eisenführ Speiser

(57) **Zusammenfassung**

Die Erfindung betrifft einen Rahmen (1, 1') für einen Fahrzeugsitz (100), insbesondere für einen Fahrzeugsitz für Menschen mit Beeinträchtigung, wobei wobei der Rahmen (1, 1') einen Sitzabschnitt (2, 2`) und einen Rückenlehnenabschnitt (4, 4') aufweist, wobei der Sitzabschnitt (2, 2`) und der Rückenlehnenabschnitt (4, 4') verbunden sind, und der Rahmen (1, 1') aus Aluminium oder einer Aluminiumlegierung besteht, und der Rahmen (1, 1'), bevorzugt der Rückenlehnenabschnitt (4), Halterungen (12) bzw. Montagepunkte (46) für ein Personen-Rückhaltesystem (110), insbesondere ein Gurtsystem (110'), aufweist.

Die Erfindung beschreibt ferner eine Unterkonstruktion (60) zum Aufnehmen eines Rahmens (1) für einen Fahrzeugsitz (100), insbesondere eines Rahmens (1, 1') und zum reversibel lösbaren Koppeln an einer Fahrzeugstruktur, wobei die Unterkonstruktion (60) zumindest teilweise oder vollständig aus Aluminium oder einer Aluminiumlegierung besteht.

## Beschreibung

Die Erfindung betrifft einen Rahmen für einen Fahrzeugsitz, insbesondere für einen Fahrzeugsitz für Menschen mit Beeinträchtigung. Des Weiteren bezieht sich die Erfindung auch auf eine Unterkonstruktion zum Aufnehmen eines Rahmens für einen Fahrzeugsitz und zum reversibel lösbaren Koppeln an einer Fahrzeugstruktur sowie auf einen Fahrzeugsitz zum Transport von Personen.

Fahrzeugsitze für Kraftfahrzeuge, also für durch Maschinenkraft bewegte Landfahrzeuge, unterliegen streng definierten Anforderungen, um die mit dem Transport von Personen verknüpften Sicherheitsbestimmungen zuverlässig erfüllen zu können. Dabei besteht neben dem Bestreben eines komfortablen Transports der Fahrzeuginsassen insbesondere das Ziel, den die Basis für die Festigkeit des Fahrzeugsitzes bildenden Rahmen im Gewicht zu verringern, und damit auch das Gesamtgewicht des Fahrzeugsitzes und des mit einem solchen Fahrzeugsitz ausgerüsteten Kraftfahrzeugs zu minimieren. Gleichzeitig soll ein solcher Fahrzeugsitz auch weiterhin zuverlässig die an ihn gestellten Sicherheitsanforderungen erfüllen.

Zum prioritätsbegründenden deutschen Gebrauchsmuster hat das Deutsche Patent- und Markenamt die folgenden Dokumente recherchiert: DE 10 2014 211 877 A1; DE 298 16 819 U1; DE 20 2006 007 562 U1; DE 20 2007 006 256 U1; US 2010/0148547 A1; EP 0 745 508 B1 und EP 2 358 561 B1.

Der Erfindung lag daher die Aufgabe zugrunde, einen Rahmen für einen Fahrzeugsitz, eine Unterkonstruktion für einen Fahrzeugsitz sowie einen Fahrzeugsitz aufzuzeigen, mittels denen ein zuverlässiger Kompromiss zwischen einem geringen Gewicht bei einer ausreichend hohen Festigkeit und weiter gestiegenen Sicherheitsanforderungen geschaffen ist.

Die Erfindung löst die ihr zugrundeliegende Aufgabe bei einem Rahmen für einen Fahrzeugsitz, insbesondere für einen Fahrzeugsitz für Menschen mit Beeinträchtigung, mit den Merkmalen nach Anspruch 1. Insbesondere besteht der Rahmen aus Aluminium oder einer Aluminiumlegierung. Mit der Verwendung von Aluminium oder einer Aluminiumlegierung zur Ausbildung des den Fahrzeugsitz ausstreifenden Rahmens, insbesondere des gesamten Rahmens, kann das Gewicht des Rahmens reduziert werden. Damit ist einerseits erreicht, dass die verbleibende Nutzlast eines Fahrzeugs vergrößert ist und andererseits lässt sich das Fahrzeug mit einem solchen im Gewicht verringerten Rahmen energiesparender betreiben. Gleichzeitig birgt die Verwendung von Aluminium oder einer Aluminiumlegierung den Vorteil, dass der Rahmen trotz seines verringerten Gewichts eine hohe Festigkeit aufweist, wodurch die an einen solche Rahmen gestellten Sicherheitsanforderungen erfüllt werden können. Vorzugsweise wird ein solcher Rahmen an einem Fahrzeugsitz eines Kraftfahrzeuges eingesetzt. Zur Ausbildung des Rahmens wird als Material beispielsweise eine Aluminium-Magnesium-Legierung, insbesondere ALMG 6082, verwendet. Gemäß der Erfindung weist der Rahmen einen Sitzabschnitt und einen Rückenlehnenabschnitt auf, wobei der Sitzabschnitt und der Rückenlehnenabschnitt miteinander verbunden sind. Zudem weist der Rahmen ferner Halterungen bzw. Montagepunkte für ein Personen-Rückhaltesystem auf, insbesondere ein Gurtsystem. Mittels der direkt am Rahmen für das Rückhaltesystem vorgesehenen Halterungen bzw. Montagepunkte ist ein sicherer Rückhalt einer Person, ohne dass übermäßig hohe Kräfte auf diese einwirken, an einem mit einem solchen Rahmen ausgerüsteten Fahrzeugsitz möglich. Zudem kann in einer Ausführung ein solcher Rahmen auf einfache Weise für einen in einem Fahrzeug reversibel montier- und demontierbaren Fahrzeugsitz verwendet werden. In einer bevorzugten Ausgestaltung weist der Rückenlehnenabschnitt die Halterungen und/oder Montagepunkte für das Personen-Rückhaltesystem, insbesondere Gurtsystem auf.

In einer bevorzugten Weiterbildung ist der Sitzabschnitt starr wobei der Sitzabschnitt (2, 2') und der Rückenlehnenabschnitt (4, 4') miteinander verbunden sind oder zumindest Teile dessen sind beweglich mit dem Rückenlehnenabschnitt verbunden. Durch eine starre Verbindung zwischen dem Rückenlehnenabschnitt und dem Sitzabschnitt weist der Rahmen im Verbindungsbereich eine erhöhte Festigkeit auf, sodass beispielsweise auf den Rückenlehnenabschnitt insbesondere durch das Personen-Rückhaltesystem einwirkende Kräfte sicher aufgenommen und in eine den Sitz tragende Struktur des Fahrzeugs übertragen werden können. In einer möglichen Ausgestaltung sind zumindest Teile des Sitzabschnittes beweglich zum Rückenlehnenabschnitt und damit zum Rahmen ausgebildet. Wird ein Sitz nicht benötigt, kann dieser bevorzugt verkleinert werden, wodurch mehr Platz im Fahrzeug geschaffen ist. Vorliegend definiert der Sitzabschnitt des Rahmens im Wesentlichen den Teil des Fahrzeugsitzes, der dem Sitzbereich mit seiner Sitzfläche entspricht. Der Rückenlehnenabschnitt des Rahmens entspricht im Wesentlichen dem Teil des Fahrzeugsitzes, welcher der Rückenlehne des Fahrzeugsitzes entspricht. Der Sitzabschnitt und der Rückenlehnenabschnitt können für eine starre Verbindung in ihrem Verbindungsbereich beispielsweise miteinander verschraubt sein.

Eine Weiterbildung der Erfindung sieht vor, dass der Rahmen einen Befestigungsabschnitt zum Befestigen an einer Unterkonstruktion aufweist, wobei der Rückenlehnenabschnitt einstückig mit dem Befestigungsabschnitt ausgebildet ist. Damit ist die strukturelle Integrität des Rahmens in den Bereichen weiter verbessert, an denen bei einer Unfallsituation die größten Kräfte wirken, wodurch dieser im Vergleich zu einem mehrteilig ausgebildeten Rahmen deutlich höhere Kräfte aufnehmen kann. Um die Einstückigkeit des der kraftaufnehmenden Teile des Rahmens zu erzielen, sind der Rückenlehenabschnitt und zumindest der Befestigungsabschnitt des Rahmens, und in einer möglichen Ausführung auch der Sitzabschnitt vorzugsweise stoffschlüssig miteinander verbunden, insbesondere miteinander verschweißt. In einer bevorzugten Ausführung sind der Sitzabschnitt und der Rückenlehnenabschnitt selbst einstückig bzw. einteilig ausgebildet. Die Verbindung zwischen den die Rahmenabschnitte ausbildenden Strukturteilen beruht bevorzugt jeweils auf einer Stoffschlussverbindung, sodass der gesamte Rahmen einteilig ist bzw aus einem Stück besteht.

Unter dem Begriff "einstückig" ist vorliegend auch zu verstehen, dass der Rahmen aus mehreren verschiedenen Profilkörpern oder Strukturteilen ausgebildet ist, welche so miteinander verbunden sind, insbesondere miteinander verschweißt sind, dass diese nach dem Fertigstellen des Rahmens nicht mehr zerstörungsfrei voneinander getrennt werden können.

Gemäß einer möglichen Ausführungsform weist der Rückenlehnenabschnitt zwei seitliche im Abstand zueinander angeordnete, die Breite des Rückenlehnenabschnitts definierende Stützholme auf. Der Rückenlehnenabschnitt des Rahmens wird im Wesentlichen aus den zwei zueinander beabstandet angeordneten Stützholmen ausgebildet. Der Abstand zwischen den Stützholmen definiert die Breite des Rückenlehnenabschnitts. Die Länge der Stützholme definieren die Länge/Höhe des Rückenlehnenabschnitts. Der Abstand zwischen den Stützholmen des Rückenlehnenabschnitts liegt in einem Bereich von etwa 300 mm bis etwa 450 mm. Die Stützholme weisen eine Länge in einem Bereich von etwa 650 mm bis etwa 800 mm auf.

In einer bevorzugten Ausgestaltung verlaufen die Stützholme schräg zueinander, wobei sich deren Abstand ausgehend von ihren unteren Enden in Richtung ihrer oberen Enden verringert. Durch den schrägen Verlauf der Stützholme zueinander wird die Festigkeit bzw. die strukturelle Integrität des Rückenlehnenabschnitts und des daraus ausgebildeten erfindungsgemäßen Rahmens weiter verbessert. Der Rückenlehnenabschnitt des erfindungsgemäßen Rahmens verjüngt sich bezogen auf sein Breitenmaß ausgehend vom Verbindungsbereich mit dem Sitzbereich in Richtung seines oberen Endes. Die Stützholme verlaufen in einer bevorzugten Ausgestaltung des erfindungsgemäßen Rahmens in einem Winkel im Bereich von 3 bis 8 Grad, vorzugsweise in einem Winkel von etwa 5 Grad, zueinander.

Gemäß einer Weiterbildung der Erfindung weist der Sitzabschnitt zwei seitliche im Abstand zueinander angeordnete die Breite des Sitzabschnittes definierende Tragholme auf. Mit Hilfe der Tragholme erhält der Sitzabschnitt des erfindungsgemäßen Rahmens die gewünschte Festigkeit bzw. strukturelle Integrität. Der Abstand zwischen den Tragholmen ist entscheidend für die Breite des Sitzabschnittes des Rahmens. Die Länge der Tragholme, definiert insbesondere die Tiefe des Sitzabschnittes und ist damit entscheidend für den Sitzkomfort des die Sitzfläche aufweisenden Sitzbereiches am erfindungsgemäßen Fahrzeugsitz. Der Abstand zwischen den Tragholmen des Sitzabschnitts liegt in einem Bereich von etwa 350 mm bis etwa 450 mm. Die Tragholme weisen eine Länge in einem Bereich von etwa 200 mm bis etwa 400 mm auf.

Gemäß einer bevorzugten Ausgestaltung verlaufen die Tragholme des Sitzabschnittes im Wesentlichen parallel zueinander. Der Rahmen weist in Tiefenrichtung seines Sitzabschnittes insbesondere eine gleichbleibende Breite auf. Vorzugsweise entspricht die Breite des Sitzabschnittes der Breite des Rückenlehnenabschnittes am unteren Ende. Zur Ausbildung der starren Verbindung zwischen dem Sitzabschnitt und dem Rückenlehnenabschnitt sind Abschnitte der Tragholme mit jeweils korrespondierenden Abschnitten der Stützholme direkt verbunden. Insbesondere werden die Enden der Tragholme mit Endabschnitten einer Längsseite der Stützholme auf Stoß miteinander verbunden. Die Länge der Tragholme und damit des Sitzabschnittes weist bezogen auf den Abstand der beiden Tragholme zueinander ein Verhältnis im Bereich von 0,4 bis 0,9 auf.

Eine Weiterbildung der Erfindung sieht vor, dass die Stützholme und Tragholme Längsachsen haben, welche in einem Winkel von etwa 100 Grad bis etwa 115 Grad zueinander ausgerichtet sind. Die Tragholme und die jeweils damit verbundenen Stützholme verlaufen in einem stumpfen Winkel zueinander, wodurch ein mit einem solchen erfindungsgemäßen Rahmen ausgerüsteter Fahrzeugsitz trotz seiner zum Sitzbereich in der Neigung nicht veränderlichen Rückenlehnenabschnitt einen angenehmen Sitzkomfort bietet. Die Ausrichtung des Rückenlehnenabschnitt zum Sitzabschnitt des Rahmens innerhalb des angegebenen Winkelbereiches ermöglicht auch bei längeren Fahrten das Einnehmen einer bequemen Sitzhaltung durch einen mit einem solchen Fahrzeugsitz transportierten Fahrzeuginsassen.

Vorzugsweise ist die Längsachse des Tragholmes im Betrieb des Fahrzeugsitzes im Wesentlichen horizontal angeordnet. Die Tragholme des Rahmens bzw. deren Längsachsen, verlaufen im Betrieb des Fahrzeugsitzes insbesondere parallel zu einer den Fahrzeugsitz aufnehmenden Fahrzeugstruktur. Bevorzugt hat der Rückenlehnenabschnitt damit bezogen auf die insbesondere einen Boden des Fahrzeugs ausbildende und den Fahrzeugsitz haltende Fahrzeugstruktur eine identische Ausrichtung wie zu den Tragholmen selbst. Damit nimmt eine Person auch innerhalb des Fahrzeugs eine komfortable Sitzposition ein.

In einer möglichen Ausgestaltung weist der Sitzabschnitt zusätzlich sich quer zu und zwischen den Tragholmen erstreckende Tragstreben zur Ausbildung des Befestigungsabschnittes auf. Mit Hilfe der Tragstreben werden zum einen die Tragholme auf einfache Weise in ihrer vorbestimmten Ausrichtung und/oder ihrem Abstand zueinander fixiert. Zum anderen ist der erfindungsgemäße Rahmen mittels der Tragstreben einfach an einer den Rahmen aufnehmenden Unterkonstruktion montierbar. Die Tragstreben dienen in dieser Ausführung als Befestigungsabschnitt des Rahmens an einer den Rahmen tragenden Unterkonstruktion. In einer möglichen Ausgestaltung des Rahmens ist wenigstens eine der die Tragholme miteinander verbindenden Tragstreben zumindest teilweise mit einem Abschnitt der den Rückenlehnenabschnitt ausbildenden Stützholme verbunden. Vorzugsweise sind die sich insbesondere quer zu den Tragholmen erstreckenden Tragstreben endseitig mit einem jeweils zugeordneten Tragholm oder Stützholm verschweißt. Damit ist die Festigkeit des erfindungsgemäßen Rahmens weiter verbessert. Vorzugsweise ist der Sitzabschnitt relativ zum Befestigungsabschnitt beweglich, insbesondere schwenkbar ausgebildet. Speziell bei Nichtgebrauch eines Sitzes mit einem solch erfindungsgemäßen Rahmen, kann der Sitzabschnitt des Sitzes relativ zum Befestigungsabschnitt und damit zum starr mit dem Befestigungsabschnitt verbundenen Rückenlehenabschnitt bewegt werden. Im Bedarfsfall kann das Raumangebot des Fahrzeuges angepasst, insbesondere vergrößert, und die Ladekapazität eines Fahrzeuges bei Nichtbedarf eines Fahrzeugsitzes für den Transport von sperrigen Gegenständen besser genutzt werden. Zur beweglichen Ausgestaltung des Sitzabschnittes sind bevorzugt jeweils entlang eines Abschnittes jedes Tragholmes ein Schwenklager ausgebildet. Insbesondere sind die Schwenklager an den dem Befestigungsabschnitt bzw. dem Rückenlehnenabschnitt zugewandten Enden eines jeweiligen Tragholmes angeordnet.

Gemäß einer bevorzugten Ausführungsform weist der Sitzabschnitt die Enden der Tragholme miteinander verbindende Verbindungsstreben auf. Mit den die Tragholme verbindenden Verbindungsstreben erhält der Sitzabschnitt seine notwendige Festigkeit bzw. Steifigkeit. Ein Verwinden der Holme und Streben zueinander ist damit vermieden. Vorzugsweise wird mithilfe der Tragholme und der Verbindungsstreben ein etwa rechteckiges Rahmenteil für den Sitzabschnitt ausgebildet. Mit dem Vorsehen der Schwenklager an jeweils einem Endabschnitt der Tragholme ist vorzugsweise eine parallel zu den Verbindungsstreben verlaufende Schwenkachse erzeugt. Bevorzugt ist der Sitzabschnitt derart schwenkbar am Befestigungsabschnitt aufgenommen, dass die Tragholme des Sitzabschnittes in der eingeklappten Position des Sitzabschnittes etwa parallel zu den Stützholmen des Rückenlehnenabschnitts verlaufen.

In einer bevorzugten Weiterbildung der Erfindung erstrecken sich die Stützholme des Rückenlehnenabschnitts über die Gesamthöhe des Rahmens und jeder Stützholm ist an seinem unteren Endbereich entlang einer Längsseite mit einem ersten Ende eines Tragholmes verbunden. Durch die Ausgestaltung der Stützholme über die Gesamthöhe des erfindungsgemäßen Rahmen und das Ausbilden der Verbindung zwischen dem Stützholm und den stumpf daran anstoßenden Enden der Tragholme entlang einer Längsseite ist eine verbesserte strukturelle Festigkeit des Rahmens insgesamt bewirkt. Einer auf den Rahmen bzw. die Rahmenabschnitte einwirkenden Kraft kann entsprechend verbessert entgegenwirkt werden. Etwaige bei einer Unfallsituation an dem Rahmen des Fahrzeugsitzes auftretende Kräfte können beispielsweise sicher vom Rückenlehnenabschnitt, insbesondere den Stützholmen, in Richtung der Tragholme und weiter von den Tragholmen in die den Rahmen im Betrieb mit einer Unterkonstruktion koppelnden Tragstreben abgeleitet werden, ohne dass die am Rahmen wirkenden Kräfte oberhalb der zulässigen Gesamtbelastung liegen.

In der vorliegend beschriebenen bevorzugten Ausführungsform stößt der Tragholm mit seinem stirnseitigen Ende stumpf gegen eine Längsseite am unteren Ende eines jeweils zugeordneten Stützholmes. Die Stirnseite des Tragholmes und die Längsseite des Stützholmes werden stoffschlüssig miteinander verbunden, insbesondere verschweißt.

Gemäß einer bevorzugten Ausgestaltung der Erfindung sind die Stützholme, Tragholme und/oder Tragstreben jeweils aus Strangpress-Profilen ausgebildet. Das Vorsehen von Strangpress-Profilen ermöglicht eine einfache Herstellung der den Rahmen im Wesentlichen ausbildenden Strukturteile. Solche Profile können endlos produziert werden und die einzelnen aus einem solchen Strangpress-Profil bestehenden Teile des Rahmens oft durch einfaches Ablängen erzeugt werden. Darüber hinaus ist mit der Ausgestaltung der Stützholme, Tragholme und/oder Tragstreben aus einem Strangpress-Profil aus Aluminium eine vereinfachte nachfolgende Bearbeitung, wie beispielsweise eine spanende Bearbeitung der Profile möglich.

Vorzugsweise weisen zumindest die Stützholme und/oder Tragholme mindestens einen im Inneren des Profils verlaufenden Versteifungssteg zur Ausbildung eines Mehrkammerprofils auf. Mit dem Vorsehen eines solchen Versteifungsstegs ist die Festigkeit bzw. die Widerstandsfähigkeit von Stützholm und/oder Tragholm gegen eine von außen auf das Profil einwirkende Kraft weiter verbessert. Ein mit einem solchen Versteifungssteg ausgerüstetes Profil weist eine deutlich höhere Formhaltigkeit im Falle einer auf das Profil einwirkenden Kraft auf. Im Inneren des Stützholmes des Rückenlehnenabschnitts und des Tragholmes des Sitzabschnitts verläuft in Längsrichtung des Profils jeweils mindestens ein Versteifungssteg, bevorzugt zwei solcher Versteifungsstege. Innerhalb der als Strangpress-Profile ausgebildeten Stützholme und/oder Tragholme sind mehrere parallel nebeneinander angeordnete Kammern vorgesehen, was die Herstellung als Strangpress-Profil weiter vereinfacht.

Eine Weiterbildung des Rahmens sieht vor, dass am Befestigungsabschnitt ein Drehlager angeordnet ist, mittels dem der Rahmen um eine parallel zu den Stützholmen verlaufende Drehachse bewegbar ist, und wobei der Befestigungsabschnitt vorzugsweise als Kopplungspunkt zum Befestigen des Rahmens an der Unterkonstruktion eingerichtet ist. Mithilfe des am Befestigungsabschnitt insbesondere der Unterseite des Befestigungsabschnittes angeordneten Drehlagers ist es möglich, den Rahmen des Sitzes und damit eine die Person aufnehmende Sitzschale in unterschiedliche Ausrichtungen zu einer den Rahmen tragenden Unterkonstruktion zu bringen. Damit kann die Sitzschale in eine, bezogen auf eine in Fahrtrichtung weisende Normalstellung des Sitzes, abweichende Ausrichtung gebracht werden.

Das Drehlager weist zu seiner Ausgestaltung bevorzugt mindestens zwei relativ zueinander bewegliche Lagerteile auf, insbesondere ein Innenlagerteil und ein Außenlagerteil. Vorzugsweise wird das Innenlagerteil, am Rahmen befestigt und das Außenlagerteil wird an der Unterkonstruktion des Fahrzeugsitzes montiert. In einer möglichen Ausgestaltung weisen die Lagerteile des Drehlagers neben ihren Gleitflächen zum radialen Abgleiten der Drehteile zueinander auch Gleitflächen auf, welche in axialer Richtung miteinander zusammenwirken und speziell die auf dem Rahmen einwirkende Kräfte vom Innenlagerteil auf das Außenlagerteil übertragen, so dass diese in die Unterkonstruktion abgeleitet werden können.

Gemäß einer bevorzugten Ausführungsform des Rahmens ist das Drehlager am Befestigungsabschnitt mittig zwischen den Stützholmen oder seitlich in Richtung eines der Stützholme versetzt angeordnet. Ein mittig zwischen den Stützholmen angeordnetes Drehlager, dessen Drehachse insbesondere mit der Mittenachse des Rückenlehnenabschnittes zusammenfällt, ermöglicht eine gleichmäßige Kraftverteilung auf das Drehlager, speziell beim Einleiten von etwaigen auf den Rahmen einwirkenden Kräften in die Unterkonstruktion. Eine alternative Ausgestaltung des Rahmens mit einem außermittig angeordneten Drehlager bewirkt einen seitlichen Versatz der Drehachse zur Mittenachse des Rückenlehnenabschnittes. An einem derartig versetzt angeordneten Drehlager erfolgt vielmehr ein Verschwenken des Sitzes um die Drehachse des Drehlagers. Durch das außermittige Verschwenken wird der Rahmen mit bevorzugt hochgeklapptem Sitzabschnitt in eine an eine Fahrzeugwand angenäherte Position verbracht. Mittels der erfindungsgemäßen Ausgestaltung ist die Raumausnutzung innerhalb des Fahrzeuges weiter verbessert, da nicht benötigte Fahrzeugsitze platzsparend innerhalb des Fahrzeuginnenraumes positioniert werden können.

In einer möglichen Ausgestaltung haben die Stützholme und Tragholme eine Profilhöhe und eine Profilbreite, wobei das Verhältnis von Profilhöhe zu Profilbreite entlang wenigstens eines Abschnitts von Stütz- und/oder Tragholm in einem Bereich von etwa 5:1 bis etwa 10:1 liegt. Innerhalb des angegebenen Verhältnisses weist ein Stütz- und/oder Tragholm bezogen auf seine Profilhöhe ein ausreichend hohes Flächenträgheitsmoment auf. Im Falle einer Unfallsituation kann eine auf einen Holm des Rahmens einwirkende Kraft sicher aufgenommen und in Richtung einer mit dem Rahmen koppelbaren Unterkonstruktion abgeleitet werden.

In einer möglichen Ausführungsform des erfindungsgemäßen Rahmens weisen die Stützholme an Rückenlehnenabschnitt eine Profilbreite im Bereich von 15 bis 35 mm und eine Profilhöhe von 50 bis 100 mm auf. Vorzugsweise weisen die Tragholme des Sitzabschnittes eine ähnliche Profilbreite auf wie die Stützholme haben jedoch eine Profilhöhe, welche entlang eines Abschnitts der Tragholme etwa im Bereich von 50 bis 150 mm beträgt.

Vorzugsweise verjüngen sich die Tragholme von ihrem ersten Ende in Richtung ihres zweiten Endes in der Höhe keilförmig, wobei die Höhe am ersten Ende vorzugsweise mindestens doppelt so groß ist, wie die Höhe am zweiten Ende. Jeder Tragholm weist im Verbindungsbereich zum Stützholm seine größte Profilhöhe auf. Der Verbindungsbereich hat eine Länge, die im Verhältnis zur Gesamtlänge des Stützholmes am Rahmen in einem Verhältnis von mindestens 1:6 bis etwa 1:5 liegt. Damit ist eine ausreichend hohe Festigkeit im Verbindungsbereich zwischen den Tragholmen und den Stützholmen bewirkt, welche bevorzugt untereinander eine Stoßverbindung ausbilden. Die aneinanderstoßenden Flächen werden insbesondere stoffschlüssig miteinander verbunden, insbesondere miteinander verschweißt. Je größer der Abstand des Tragholmes vom Verbindungsbereich in Richtung des zweiten Endes wird, desto geringer kann die Profilhöhe an den Tragholmen wegen der abnehmenden Belastung, gewählt werden.

Vorzugsweise sind an den Tragholmen an deren Oberseite zum Erzeugen der Keilform Abschnitte der Tragholme abgetrennt, wodurch ein zumindest teilweise nach oben offenes Profil ausgebildet ist. Mit dem schrägen Abtrennen des Profils ist eine einfache Anpassung in der Profilhöhe an die auf die Tragholme wirkende Belastung möglich.

Eine bevorzugte Weiterbildung am Rahmen sieht vor, dass die Stützholme in Richtung ihres oberen Endes eine sich verringernde Profilhöhe aufweisen. Insbesondere weisen die Stützholme in Längsrichtung gesehen entlang ihres letzten oberen Drittels eine sich verringernde Profilhöhe auf. Damit kann das Gewicht des Rahmens weiter verringert werden, ohne das an einem solch angepassten Rahmen, insbesondere dessen Stützholme, Einbußen hinsichtlich der Festigkeit bzw. der strukturellen Integrität auftreten. Vorzugsweise verringert sich die Profilhöhe im oberen Drittel der Stützholme auf etwa die Hälfte der Gesamthöhe des Profils.

Die insbesondere quer zu den Tragholmen verlaufenden Tragstreben weisen ein Rechteckprofil auf, wobei die Unterseite der Tragstreben vorzugsweise an der Unterkante der Tragholme des Sitzabschnittes vorstehen. Insbesondere die Unterseiten der Tragholme dienen als Aufstandsfläche für den an einer Unterkonstruktion montierbaren Rahmen. Vorzugsweise ist eine der Tragstreben mit ihren Enden am zweiten Ende der miteinander zu verbindenden Tragholme, also am vorderen Ende des Sitzabschnittes angeordnet. Die andere Tragstrebe ist endseitig insbesondere mit Bereichen am ersten Ende des Tragholmes und auch Bereichen bzw. Abschnitten der sich über die Gesamthöhe erstreckenden Stützholme fest verbunden. Insbesondere sind die aus dem Strangpress-Profilen mit einem rechteckigen Querschnitt bestehenden Tragstreben an sämtlichen Umfangskanten mit den daran anliegenden Bereichen der Tragholme und/oder Stützholme verbunden um insbesondere mit diesen verschweißt.

Eine Weiterbildung der Erfindung sieht vor, dass der Rahmen eine die Stützholme an ihren oberen Enden miteinander verbindende Oberstrebe aufweist. Mit der Oberstrebe ist eine weitere Versteifung des Rahmens bewirkt, was sich vorteilhaft auf die Festigkeit bzw. strukturelle Integrität des Rahmens auswirkt. Die Stützholme verbindende Oberstrebe weist wenigstens einen im Betrieb des Sitzes im Wesentlichen waagerecht verlaufenden Mittenabschnitt auf. Die Oberstrebe bildet insbesondere das obere Ende des Rahmens und begrenzt damit die Höhe der als Stütze für einen zu transportierenden Insassen dienende Rückenlehne eines Fahrzeugsitzes.

Gemäß einer bevorzugten Ausgestaltung der Erfindung ist vorgesehen, dass die Oberstrebe einteilig und entlang ihrer Längsachse wenigstens abschnittsweise gebogen ist. Vorzugsweise weist die Oberstrebe einen Mittenabschnitt auf, der im Betrieb des Sitzes vorzugsweise waagerecht verläuft. Die Oberstrebe weist an den Mittenbereich angrenzend zwei zum Mittenabschnitt angewinkelt verlaufende Endabschnitte auf. Die Endabschnitte sind unmittelbar mit den oberen Enden der Stützholme am Rückenlehnenabschnitt verbunden. Die Breite der Oberstrebe entspricht in einer Ausführungsform des Rahmens der Profilhöhe des mit den Endabschnitten der Oberstrebe zu verbindenden Stützholme. Damit ist ein absatzfreier Übergang von den Stützholmen auf die Oberstrebe erzeugt.

Die Oberstrebe ist in einer bevorzugten Ausgestaltung aus Vollmaterial ausgebildet und weist wenigstens entlang eines Abschnitts eine Ausnehmung auf. Mit Verwendung eines Vollmaterials ist eine konstruktiv einfache Möglichkeit zur Ausgestaltung der die oberen Enden des Rückenlehnenabschnitts verbindenden Oberstrebe gegeben. Entlang eines Abschnitts der Oberstrebe ist wenigstens eine Ausnehmung vorgesehen, welche das Gewicht der Oberstrebe verringert, die jedoch keinen Einfluss auf die Festigkeit der Oberstrebe und damit des gesamten Rahmens hat.

Vorzugsweise weist die Oberstrebe mehrere, vorzugsweise schlitzförmige Ausnehmungen zum Hindurchführen eines Gurtes eines Gurtsystems oder zum Aufnehmen einer Kopfstütze auf. Zumindest einige der in der Oberstrebe ausgebildeten Ausnehmungen beinhalten eine mittels des erfindungsgemäßen Rahmens umsetzbare Zusatzfunktion, nämlich zumindest das Führen eines Sicherheitsgurts durch Bereiche des Rahmens. Eine etwaige von einer Person in einer Unfallsituation auf den Gurt aufgebrachte und an den Rahmen weitergeleiteten Kraft kann mit dem erfindungsgemäß ausgebildeten Rahmen bestehend aus Aluminium oder einer Aluminiumlegierung sicher aufgenommen und in die den Rahmen tragenden Fahrzeugstruktur abgeleitet werden. Vorzugsweise ist in jedem Endabschnitt der Oberstrebe eine schlitzförmige Ausnehmung für das Hindurchführen eines Sicherheitsgurtes ausgebildet. Damit kann die Gurtführung an einem mit einem solchen Rahmen ausgerüsteten Fahrzeugsitz, in Abhängigkeit von der Position des Fahrzeugsitzes im Fahrzeug, verändert werden.

Gemäß einer bevorzugten Weiterbildung ist an mindestens einem Stützholm des Rückenlehnenabschnitts auf seiner einem weiteren Stützholm zugewandten Innenseite eine Halterung zum Befestigen des Personen-Rückhaltesystems, insbesondere eines Gurtaufrollers eines Gurtsystems angeordnet. Damit ist der erfindungsgemäße Rahmen neben dem Hindurchführen eines Gurtes eines Gurtsystems bevorzugt auch zum unmittelbaren Befestigen von Bestandteilen des Gurtsystems eingerichtet. Auf das Gurtsystem einwirkende Kräfte werden direkt in die Struktur des erfindungsgemäßen Rahmens abgeleitet. Mit der starren Ausgestaltung von Rückenlehnenabschnitt und Sitzabschnitt zueinander ist eine derartige Kraftaufnahme an einem solchen Rahmen möglich. Statt den Gurtaufroller des Gurtsystems an der Fahrzeugstruktur zu befestigen, ermöglicht ein erfindungsgemäß ausgebildeter Rahmen das zumindest der Gurtaufroller im Inneren des Rückenlehnenabschnitts und damit innerhalb eines mit eines solchen Rahmens erfindungsgemäß ausgebildeten Fahrzeugsitz integriert werden kann. In einer bevorzugten Ausgestaltung ist die Halterung als eine auf der Innenseite eines der Stützholme des Rückenlehnenabschnitts abstehende Montageplatte ausgebildet, welche mit einer Bohrung für ein den Gurtaufroller an der Halterung befestigendes Befestigungselement, wie beispielsweise ein Bolzen ausgebildet ist.

Eine mögliche Weiterbildung des Rahmens sieht vor, dass am unteren Ende wenigstens eines Stützholmes, vorzugsweise beider Stützholme, ein Montagepunkt für zusätzliche

Teile des Personen-Rückhaltesystems, insbesondere Gurtsystems, ausgebildet ist. Mittels der zusätzlichen Montagepunkte kann das gesamte Gurtsystem in den Fahrzeugsitz integrieren werden, sodass bei der Verwendung eines Fahrzeugsitzes mit einem derartig ausgebildeten Rahmen das fahrzeugseitige Vorsehen von Befestigungspunkten für ein Gurtsystem entfällt. Zum einen sind mit einem solchen Rahmen die Einsatzmöglichkeiten eines damit ausgerüsteten Fahrzeugsitzes weiter verbessert und zum anderen verringert sich der Konstruktions- und Montageaufwand eines mit einem solchen Fahrzeugsitz auszurüstenden Fahrzeugs.

Als Personen-Rückhaltesystems kann jedes beliebige System verwendet werden, was geeignet ist, eine Person auf einem Fahrzeugsitz sicher zurückzuhalten. Vorzugsweise können als Personen-Rückhaltesysteme verschiedene Gurtsysteme, wie beispielsweise Schräggurte oder Beckengurte, bekannt als 2-Punkt-Gurte, oder kombinierte Schräg-und Beckengurte, auch bezeichnet als 3-Punkt-Gurte eingesetzt werden.

Eine bevorzugte Ausgestaltung des erfindungsgemäßen Rahmens sieht vor, dass der Rahmen gemäß der Regelung Nummer 14 der Wirtschaftskommission der Vereinten Nationen für Europa (UN/ECE) - einheitliche Bedingungen für die Genehmigung der Fahrzeuge hinsichtlich der Sicherheitsgurtverankerung, der ISO FIX - Verankerungssysteme und der Verankerungen für den oberen ISO FIX - Haltegurt, Ergänzung 1 zur Änderungsserie 07, in Kraft getreten am 19. August 2010 ausgebildet ist. Die angegebene Regelung gilt für Verankerungen für Sicherheitsgurte für Erwachsene auf nach vorn oder nach hinten gerichteten Sitzen in Fahrzeugen der Klasse M und N, entsprechend den Definitionen in Anhang 7 zur Gesamtresolution über Fahrzeugtechnik (R.E. 3) (Dokument TRANS/ WP.29/78/Rev.1/Amend.2, zuletzt geändert durch Amend. 4). Zudem gilt die oben genannte Regelung für ISO FIX Verankerungssysteme und Verankerungen für den oberen ISO FIX - Haltegurt für Kinder - Rückhaltesysteme, die in Fahrzeuge in Klasse M₁ eingebaut sind.

Vorzugsweise ist der Rahmen ferner gemäß der Regelung Nummer 17 der Wirtschaftskommission der Vereinten Nation für Europa (UN/ECE) - einheitliche Bestimmungen für die Genehmigung von Fahrzeugen hinsichtlich der Sitze, ihrer Verankerungen und Kopfstützen, Änderungsserie 08, in Kraft getreten am 22. Juli 2009 ausgebildet. Die obige Regelung gilt für Fahrzeuge der Klasse M1 und N (entsprechend den Definitionen in Anhang 7 zur Gesamtresolution über Fahrzeugtechnik (R.E. 3) (Dokument TRANS/ WP.29/78/Rev.1/Amend.2, zuletzt geändert durch Amend. 4)) hinsichtlich der Widerstandsfähigkeit der Sitze und ihrer Verankerungspunkte hinsichtlich ihrer Kopfstützen. Ferner gilt vorgenannte Regelung für Fahrzeuge der Klasse N2 und M3 (entsprechend den Definitionen in Anhang 7 zur Gesamtresolution über Fahrzeugtechnik (R.E. 3) (Dokument TRANS/WP.29/78/Rev.1/Amend.2, zuletzt geändert durch Amend. 4)) hinsichtlich der nicht von der Regelung Nummer 80 erfassten Sitze in Bezug auf die Widerstandsfähigkeit der Sitze von ihren Verankerungspunkten in Bezug auf ihre Kopfstützen.

Außerdem gilt obige Regelung für Fahrzeuge der Klasse M1 hinsichtlich der Gestaltung der Rückenlehnen von Rücksitzen und der Einrichtungen, die dazu bestimmt sind, die Insassen von der Gefahr verschobener Gepäckstücke bei einem Frontalaufprall zu schützen.

Gemäß einem zweiten Aspekt betrifft die vorliegende Erfindung eine Unterkonstruktion zum Aufnehmen eines Rahmens für einen Fahrzeugsitz, insbesondere eines Rahmens, ausgebildet nach einem der vorstehend beschriebenen bevorzugten Ausführungsformen, und zum reversiblen lösbaren Koppeln an einer Fahrzeugstruktur. Die Unterkonstruktion löst auch die bei der erfindungsgemäßen Vorrichtung zugrunde gelegte Aufgabe, in dem die Unterkonstruktion zumindest teilweise oder vollständig aus Aluminium oder einer Aluminiumlegierung besteht. Mit der Verwendung von Aluminium oder einer Aluminiumlegierung zur Ausgestaltung von zumindest Teilen der Unterkonstruktion kann das Gewicht der Unterkonstruktion wesentlich reduziert werden. Damit ist einerseits erreicht, dass die verbleibende Nutzlast eines Fahrzeugs vergrößert ist und andererseits lässt sich das Fahrzeug mit einer solchen Unterkonstruktion energiesparender betreiben. Gleichzeitig birgt die Verwendung von Aluminium oder einer Aluminiumlegierung den Vorteil, dass die Unterkonstruktion eine hohe Festigkeit aufweist, wodurch die an eine solche Unterkonstruktion gestellten Sicherheitsanforderungen erfüllt werden können. Gemäß einer bevorzugten Ausführungsform sind die wesentlichen im Strukturteile der Unterkonstruktion aus Aluminium oder einer Aluminiumlegierung ausgebildet. Zur Ausbildung der Unterkonstruktion wird als Material beispielsweise eine Aluminium-Magnesium-Legierung, insbesondere ALMG 6082, verwendet.

Gemäß einer bevorzugten Weiterbildung weist die Unterkonstruktion mindestens eine mit dem Rahmen, vorzugsweise mit dem Tragstreben des Rahmens, in Wirkverbindung bringbare Montageschnittstelle auf. Mit Hilfe der an der Unterkonstruktion vorgesehenen Montageschnittstelle ist das Montieren des Rahmens auf der Unterkonstruktion vereinfacht. Vorzugsweise weist die Unterkonstruktion mehrere Befestigungselemente auf, welche mit an dem Rahmen vorgesehenen Aufnahmen für die Befestigungselemente korrespondieren. Insbesondere wirken die Befestigungselemente der Montageschnittstelle der Unterkonstruktion mit den Tragstreben am Rahmen zusammen. Die Montageschnittstelle selbst weist wenigstens zwei Haltestreben auf, welche im montierten Zustand des Rahmens quer zu den Tragstreben des Rahmens verlaufen und als Auflager für den Rahmen auf der Unterkonstruktion dienen. Die Haltestreben der Montageschnittstelle verlaufen zueinander parallel und sind im montierten Zustand des Rahmens an der Unterkonstruktion parallel zu den Tragholmen am Sitzabschnitt des Rahmens ausgerichtet. An jeder Haltestrebe der Montageschnittstelle sind insbesondere zwei Befestigungselemente zum Befestigen der beiden Tragstreben des Rahmens vorgesehen.

Gemäß einer Weiterbildung der Unterkonstruktion weist diese mehrere, insbesondere vier, Stützstreben auf, welche jeweils mit einem ersten Enden mit der Montageschnittstelle verbunden sind und an ihren entgegengesetzten Enden jeweils Befestigungsmittel zum Koppeln und Entkoppeln der Unterkonstruktion an und von der Fahrzeugstruktur aufweisen. Mit Hilfe der mehreren Stützstreben erfolgt die Krafteinleitung in die Unterkonstruktion des den Sitz haltenden Fahrzeugstruktur. Die Stützstreben verlaufen vorzugsweise von ihren ersten mit der Montageschnittstelle gekoppelten Enden schräg nach außen, sodass der Abstand zwischen mindestens zwei benachbarten Stützstreben in Richtung ihrer zweiten Enden größer wird. In einer Ausgestaltung sind vier Stützstreben vorgesehen, welche als Strangpress-Profil ausgebildet sein können und entlang ihrer Erstreckung wenigstens abschnittsweise einen gebogenen Verlauf aufweisen. Die Befestigungsmittel an den zur Montageschnittstelle entgegengesetzten Enden der Stützstreben sind dazu eingerichtet, in an der Fahrzeugstruktur ausgebildete Aufnahmen beispielsweise eines am Fahrzeugboden ausgebildeten "Smartfloor-Systemboden" einzugreifen und darin verriegelt zu werden. Die Befestigungsmittel weisen insbesondere Arretiermittel und Vorsprünge auf, welche in Aufnahmen des "Smartfloor-Systembodens" eingeführt bzw. eingesetzt werden und mit korrespondierenden Formschlusselementen der Aufnahmen formschlüssig verriegelbar sind, so dass die Unterkonstruktion beliebig oft mit der Fahrzeugstruktur gekoppelt und von dieser entkoppelt werden kann. Damit kann insbesondere das Innere des Fahrzeugs individuell an die jeweils beabsichtigte Verwendung angepasst werden. In einer weiteren Ausführung werden die Befestigungsmittel fest mit dem Fahrzeugboden verschraubt.

In einem weiteren Aspekt betrifft die Erfindung einen Fahrzeugsitz für den Transport von Personen. Der Fahrzeugsitz löst auch die dem Rahmen zugrunde gelegte Aufgabe, indem der Fahrzeugsitz einen Rahmen nach einem der vorstehend beschriebenen bevorzugten Ausführungsformen, und eine Unterkonstruktion nach einer der vorstehend beschriebenen bevorzugten Ausführungsformen aufweist, sowie ein am Rahmen befestigtes Personen-Rückhaltesystem, vorzugsweise Gurtsystem. Hinsichtlich möglicher Ausführungen und Weiterbildungen des Fahrzeugsitzes und sich etwaiger daraus ergebender technischer Effekte und Vorteile wird auf die Beschreibung zum Rahmen und der Unterkonstruktion verwiesen. Ein mit einem solchen Rahmen ausgerüsteter Fahrzeugsitz kann starr im Fahrzeug verbaut sein. Alternativ kann ein solcher Fahrzeugsitz als ein im Innenraum eines Fahrzeuges reversibel montier- und demontierbaren Fahrzeugsitz ausgeführt sein, der im Bedarfsfall im Innenraum des Fahrzeuges positioniert und auch wieder daraus entnommen werden kann.

In noch einem weiteren Aspekt betrifft die vorliegende Erfindung die Verwendung eines Rahmens in einem Fahrzeugsitz eines Kraftfahrzeugs, wobei der Rahmen gemäß einer der vorstehend beschriebenen bevorzugten Ausführungsformen ausgebildet ist. Mit einem solchen in einem Fahrzeugsitz verwendeten Rahmen können insbesondere die an einem solchen Fahrzeugsitz gestellten Anforderungen gemäß den obigen Regelungen Nummer 14 und 17 der Wirtschaftskommission der Vereinten Nation für Europa (UN/ECE) erfüllt werden.

Gemäß den bevorzugten Ausgestaltungen zur Unterkonstruktion, dem Fahrzeugsitz oder der Verwendung eines solchen Rahmens wird auf die oben beschriebenen bevorzugten Ausgestaltungen zum erfindungsgemäßen Rahmen verwiesen. Demzufolge sind die zum erfindungsgemäßen Rahmen beschriebenen, bevorzugten Ausführungsformen bzw. Weiterbildungen zugleich auch bevorzugte Ausführungsformen der erfindungsgemäßen Unterkonstruktion, des erfindungsgemäßen Fahrzeugsitzes sowie der Verwendung eines Rahmens in einem Fahrzeugsitz eines Kraftfahrzeugs. Zur Unterkonstruktion, zum Fahrzeugsitz oder der Verwendung eines Rahmens in einem Fahrzeugsitz beschriebene bevorzugte Ausführungsform bzw. Weiterbildungen, welche sich auf den Rahmen beziehen, sind zugleich auch bevorzugte Ausführungsformen des Rahmens.

Die Erfindung wird im Folgenden anhand eines bevorzugten Ausführungsbeispiels unter Bezugnahme die beigefügten Figuren näher beschrieben. Hierbei zeigen:
- Fig. 1:: eine perspektivische Ansicht eines erfindungsgemäßen Rahmens gemäß eines ersten Ausführungsbeispiels;
- Fig. 2:: eine Vorderansicht des Rahmens nach Fig. 1;
- Fig. 3:: eine Seitenansicht des Rahmens nach Fig. 1 im Schnitt gemäß dem in Fig. 2 eingezeichneten Schnitt A;
- Fig. 4:: eine Draufsicht auf den erfindungsgemäßen Rahmen nach Fig. 1;
- Fig. 5:: eine perspektivische Ansicht einer Unterkonstruktion zum Aufnehmen eines Rahmens nach Fig. 1;
- Fig. 6:: eine Seitenansicht der erfindungsgemäßen Unterkonstruktion nach Fig. 5;
- Fig. 7:: eine schematische dreidimensionale Ansicht eines Fahrzeugsitzes gemäß der Erfindung;
- Fig. 8:: eine Draufsicht auf einen erfindungsgemäßen Fahrzeugsitz nach Fig. 7;
- Fig. 9:: eine perspektivische Ansicht eines erfindungsgemäßen Rahmens gemäß eines zweiten Ausführungsbeispiels;
- Fig. 10:: eine Seitenansicht des Rahmens nach Fig. 9;
- Fig. 11:: eine Ansicht des Rahmens nach Fig. 9 von seiner Unterseite;
- Fig. 12:: eine perspektivische Ansicht des Rahmens nach Fig. 9 mit nach oben verschwenktem Sitzabschnitt, und
- Fig. 13:: eine perspektivische Ansicht des Rahmens nach Fig. 9, welcher um sein Drehlager herum bewegt wurde.

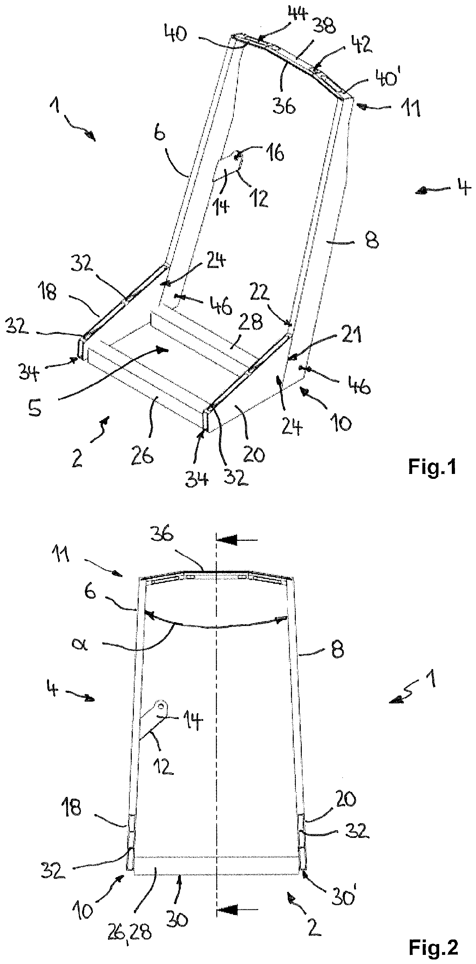

Fig. 1 zeigt einen Rahmen 1, der einen Sitzabschnitt 2 und einen Rückenlehnenabschnitt 4 aufweist. Der Sitzabschnitt 2 ist mit dem Rückenlehnenabschnitt 4 starr verbunden.

In der gezeigten Ausführungsform sind der Sitzabschnitt 2 und der Rückenlehnenabschnitt 4 stoffschlüssig miteinander verbunden, sodass der Rahmen 1 insbesondere einstückig ausgebildet ist. Der Rahmen 1 ist in einer bevorzugten Ausführung aus einem Material ausgebildet, dass Aluminium aufweist, also eine Aluminiumlegierung sein kann, oder vollständig aus Aluminium besteht. Zur Ausbildung des Rahmens 1 wird beispielsweise eine Aluminium-Magnesium-Legierung, insbesondere ALMG 6082, verwendet.

Der Rückenlehnenabschnitt 4 weist zwei seitliche im Abstand zueinander angeordnete Stützholme 6, 8 auf, mit denen die Breite des Rückenlehnenabschnitts 4 definiert ist. In der vorliegenden Ausführungsform können, wie in Fig. 2 gezeigt, die Stützholme 6, 8 schräg zueinander verlaufen, wobei sich deren Abstand von ihrem unteren Ende 10 in Richtung ihres oberen Endes 11 zueinander verringert. Die Stützholme 6, 8 schließen einen Winkel α ein, der im Bereich zwischen 3 und 8 Grad liegt.

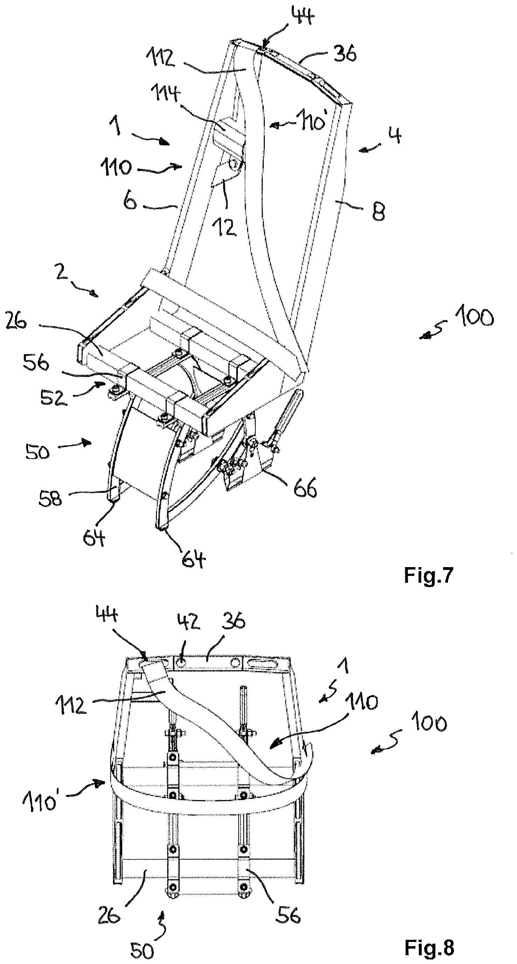

Der Rahmen 1 weist Halterungen 12 bzw. Montagepunkte 46 für ein Personen-Rückhaltesystems 110 auf, insbesondere für ein Gurtsystems 110' (Fig.7, 8). In einer möglichen Ausgestaltung ist, wie aus den Figuren 1 und 2 ersichtlich, am Stützholm 6 an einer dem weiteren Stützholm 8 zugewandten Innenseite die Halterung 12 zum Befestigen des Personen-Rückhaltesystems 110, insbesondere eines Gurtaufrollers 114 (Fig. 7) des Gurtsystems 110' angeordnet. Die Halterung 12 ist als Montageplatte 14 mit einem Durchbruch 16 zum Befestigen des Gurtaufrollers 114 ausgebildet.

Der Sitzabschnitt 2 umfasst zwei seitlich im Abstand zueinander angeordnete Tragholme 18, 20. Die Tragholme 18, 20 definieren die Breite des Sitzabschnittes 2. Die Tragholme 18, 20 sind im Wesentlichen parallel zueinander angeordnet. Wie aus Fig. 2 zu entnehmen, sind die Tragholme 18, 20 in Richtung ihrer Höhe H_{T} korrespondierend zu den schräge verlaufenden Stützholmen 6, 8 des Rückenlehnenabschnitts 4 geneigt. Damit ist ein absatzfreier Übergang im Verbindungsbereich 21 zwischen den Tragholmen 18, 20 des Sitzabschnitts 2 und den Stützholmen 6, 8 des Rückenlehnenabschnitts 4 erzeugt.

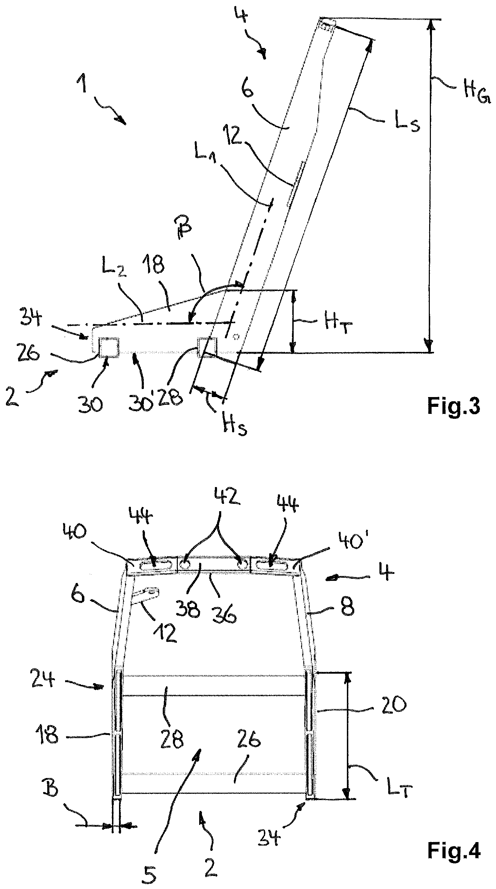

Wie aus Fig. 3 ersichtlich, haben die Stützholme 6, 8 und Tragholme 18, 20 Längsachsen L₁, L₂, wobei die Längsachse L₁, L₂ in einem Winkel β von etwa 100 Grad bis 115 Grad zueinander ausgerichtet sind. Die Stützholme 6, 8 und die Tragholme 18, 20 verlaufen somit in einem stumpfen Winkel zueinander. Die Längsachse L₂ des Tragholmes 16, 18 ist im Betrieb eines mit einem Rahmen 1 ausgerüsteten Fahrzeugsitzes 100 im Wesentlichen horizontal angeordnet.

Die Stützholme 6, 8 des Rückenlehnenabschnitts 4 erstrecken sich in der vorliegend gezeigten Ausführung über nahezu die Gesamthöhe H_{G} des Rahmens 1. Die Stützholme 6, 8 sind insbesondere an ihren unteren Enden 10 entlang eines Abschnitts ihrer Längsseite 22 mit einem ersten Ende 24 des Tragholmes 18, 20 verbunden. Die ersten Enden 24 der Tragholme 18, 20 bilden mit den Längsseiten 22 eines jeweiligen Stützholmes 6, 8 eine Stoßverbindung aus. Insbesondere ist das erste Ende 24 der Tragholme 18, 20 mit der entsprechenden Längsseite 22 der Stützholmen 6, 8 auf Stoß verschweißt.

Wie ferner aus den Figuren 1 und 4 ersichtlich, weist der Sitzabschnitt 2 sich quer zu und zwischen den Tragholmen 18, 20 erstreckende Tragstreben 26, 28 auf. Die Tragstreben 26, 28 sind mit ihren Enden ebenfalls stoffschlüssig mit den einander zugewandten Innenseiten der Tragholme 18, 20 verbunden. Die Tragstrebe 28 ist an einer bevorzugten Ausführungsform, auch mit Bereichen der unteren Enden 10 des unmittelbar an die Tragholme 18, 20 angrenzenden Stützholme 6, 8 verbunden.

Die Tragstreben 26, 28 sind, wie Fig. 4 zeigt, an den Tragholmen 18, 20 am Sitzabschnitt 2 derart angeordnet, dass sie mit ihrer Unterseite 30 an den Unterkanten 30' der Tragholme 18, 20 vorstehen. Die Tragstreben bilden in einer in den Fig gezeigten Ausführungsform einen Befestigungsabschnitt 5 für den Rahmen aus.

In einer bevorzugten Ausführung sind die Stützholme 6, 8, Tragholme 18, 20 und/oder Tragstreben 26, 28 jeweils aus Strangpress-Profilen ausgebildet. Zumindest die Stützholme 6, 8 und/oder Tragholme 18, 20 weisen zudem mindestens einen im Inneren des Profils verlaufenden Versteifungssteg 32 zur Ausbildung eines Mehrkammerprofils auf. Die Stützholme 6, 8 und die Tragholme 18, 20 weisen jeweils zwei im Inneren des Profils parallel zu den Längsachsen L₁, L₂ ausgerichtete Versteifungsstege 32 auf.

Die Stützholme 6, 8 und/oder Tragholme 18, 20 haben, siehe Fig. 3, eine Profilhöhe Hs, H_{T}, wobei das Verhältnis von Profilhöhe Hs, H_{T} zur Profilbreite entlang wenigstens eines Abschnitts von Stütz- und/oder Tragholm 6, 8, 18, 20 in einem Bereich von etwa 5:1 bis etwa 10:1 Die Stützholme 6, 8 am Rahmen 1 weisen insbesondere ein Längenmaß L_{S} im Bereich von etwa 650 mm bis etwa 800 mm auf.

Die Stützholme 6, 8 weisen eine maximale Profilhöhe Hs im Bereich von 100 mm bis etwa 200 mm, besonders bevorzugt von etwa 150 mm auf. Die Tragholme 16, 18 weisen eine maximale Profilhöhe H_{T} im Bereich von etwa 150 mm bis etwa 250 mm auf, besonders bevorzugt von etwa 200 mm.

Die Tragholme 16, 18 am Rahmen 1 weisen, siehe Fig. 4, insbesondere ein Längenmaß L_{T} von etwa 200 mm bis etwa 400 mm auf. Stütz- und/oder Tragholm 6, 8, 18, 20 weisen eine gleichbleibende Profilbreite B im Bereich von etwa 15 bis 35 mm auf.

Wie aus Fig. 3 ersichtlich, verjüngen sich die Tragholme 18, 20 von ihrem ersten Ende 24 aus, an denen diese mit den Stützholmen 6, 8 verbunden sind, in Richtung ihres zweiten Endes 34 keilförmig. Die Profilhöhe H_{T} am ersten Ende 24 ist insbesondere mindestens doppelt so groß, wie die Profilhöhe H_{T} am zweiten Ende 34.

Zum Erzeugen der Keilform an den Tragholmen 18, 20 sind insbesondere an deren Oberseite Abschnitte der Tragholme 18, 20 abgetrennt, wodurch zumindest einige der Kammern des Mehrkammerprofils nach oben hin offen sind.

Wie Fig. 3 ferner zeigt, weisen die Stützholme 6, 8 auf einer Länge von etwa einem Drittel ihrer Gesamtlänge in Richtung ihres oberen Endes ebenfalls eine sich verringernde Profilhöhe Hs auf.

Die oberen Enden 11 der Stützholme 6, 8 sind mittels einer Oberstrebe 36 miteinander verbunden. Die Oberstrebe 36 weist insbesondere eine Länge auf, die im Wesentlichen dem Abstand der voneinander abgewandten Außenwandungen der als Strangpress-Profil ausgebildeten Stützholme 6, 8 entspricht. Die Oberstrebe 36 weist einen im Betrieb des Sitzes im Wesentlichen waagerecht verlaufenden Mittenabschnitt 38 auf. Die Oberstrebe 36 ist in der vorliegend gezeigten Ausführungsform aus Vollmaterial ausgebildet.

Die Oberstreben 36 hat zu beiden Seiten des Mittenabschnittes 38 zwei abgewinkelt verlaufende Endabschnitte 40, 40'. Ferner ist, wie Fig. 4 zeigt, in der Oberstrebe 36 mindestens eine Ausnehmung 42, 44 ausgebildet. Der Mittenabschnitt 38 der Oberstrebe weist zwei als kreisrunde Durchtrittsöffnungen ausgebildete Ausnehmungen 42 auf. Ferner sind in jedem Endabschnitt 40, 40' der Oberstrebe 36 schlitzförmige Ausnehmungen 44 zum Hindurchführen eines Gurtes 112 eines Gurtsystems 110 (Fig. 7, 8) ausgebildet.

Die Oberstrebe 36 bildet somit einen Krafteinleitungspunkt für das eine Person auf dem Fahrzeugsitz zurückhaltende Personen-Rückhaltesystems 110, insbesondere Gurtsystem 110' (Fig.7, 8), aus. Der Rahmen 1, insbesondere die unteren Enden 10 der Stützholme 6, 8 weisen jeweils einen Montagepunkt 46 für zusätzliche am Rahmen 1 zu montierende Teile des Personen-Rückhaltesystems 110, insbesondere Gurtsystems 110', auf.

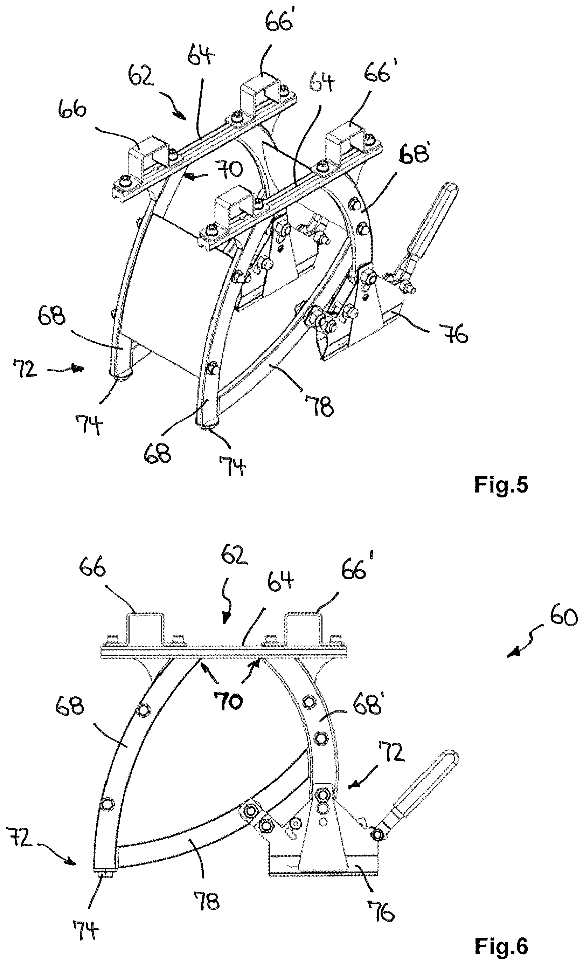

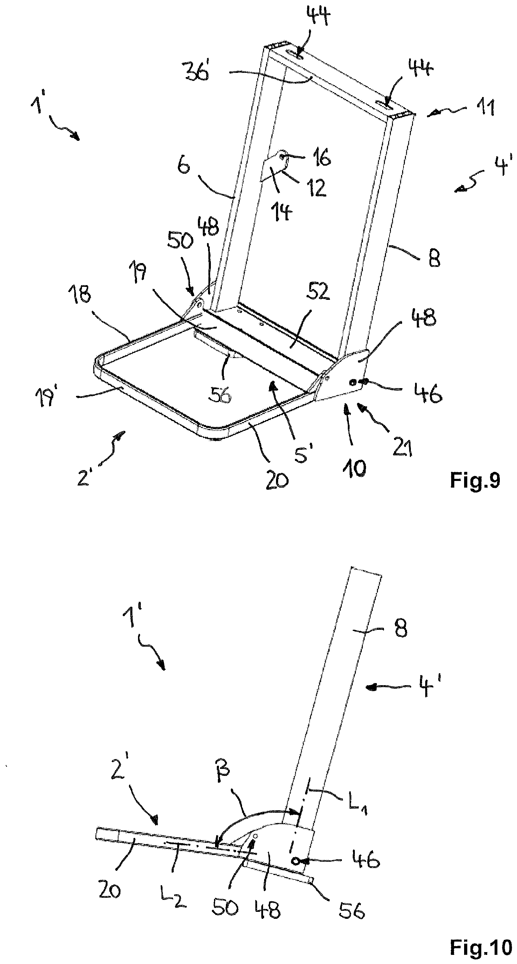

Die Figuren 5 und 6 zeigen eine mit dem Rahmen 1 koppelbare Unterkonstruktion 60, welche zum Aufnehmen des Rahmens 1 und zum reversibel lösbaren Koppeln an einer nicht näher dargestellten Fahrzeugstruktur eingerichtet ist. Die Unterkonstruktion 60 weist eine Montageschnittstelle 62 zum Befestigen des Rahmens 1, insbesondere der Tragstreben 26, 28, an der Unterkonstruktion 60 auf. Die Montageschnittstelle 62 umfasst zwei Haltestreben 64 als Auflager für die darauf aufzusetzende Tragstreben 26, 28 des Rahmens 1. Die Haltestreben 64 der Unterkonstruktion 60 verlaufen insbesondere quer zu den Tragstreben 26, 28 des Rahmens 1. Zum Befestigen der Tragstreben 26, 28 an den Haltestreben 64 weist die Montageschnittstelle 62 an jeder Haltestrebe 64 zwei Befestigungsbügel 66, 66' auf. Alternativ ist die Montageschnittstelle 62 an der Unterkonstruktion 60 dazu eingerichtet, ein in den Figuren 9 bis 13 zum zweiten Ausführungsbeispiel des Rahmens 1' gezeigtes Drehlager 56 aufzunehmen.

Die Unterkonstruktion 60 umfasst ferner mehrere Stützstreben 68, wobei jeweils ein erstes Ende 70 mit der Montageschnittstelle 62 verbunden ist und ein entgegengesetztes Ende 72 jeweils Befestigungsmittel 74, 76 zum Koppeln und Entkoppeln der Unterkonstruktion 60 an und von einer nicht näher dargestellten Fahrzeugstruktur aufweist.

In der vorliegend gezeigten Ausführungsform erstreckt sich zwischen den Stützstreben 68, 68' vorzugsweise eine weitere Koppelstrebe 78. Die Koppelstrebe 78 steift die Unterkonstruktion 60 insbesondere nahe den die Befestigungsmittel 74, 76 aufweisenden zweiten Enden 72 der Stützstreben 68, 68' aus.

Die an den zweiten Enden 72 angeordneten Befestigungsmittel 74, 76 sind dazu eingerichtet, die Unterkonstruktion 60 mit entsprechend an der Fahrzeugstruktur dafür vorgesehene nicht näher gezeigte Aufnahmen insbesondere form- bzw. kraftschlüssig zu koppeln. Damit ist eine individuelle Positionierung des Fahrzeugsitzes oberhalb der Fahrzeugstruktur oder auch gar eine gänzliche Entnahme eines Fahrzeugsitzes aus dem Innenraum eines Fahrzeugs erreicht.

In den Figuren 7 und 8 ist ein schematisch dargestellter Fahrzeugsitz 100 für den Transport von Personen gezeigt, der zur besseren Darstellung der Erfindung ohne die für einen Fahrzeugsitz typische Polsterung und Stoffteile abgebildet ist. Der Fahrzeugsitz 100 umfasst einen Rahmen 1 und eine den Rahmen 1 mit der Fahrzeugstruktur koppelnde Unterkonstruktion 60 gemäß der oben beschriebenen bevorzugten Ausführungsformen.

Ferner ist in den Fahrzeugsitz ein Personen-Rückhaltesystems 110, insbesondere ein Gurtsystem 110' integriert, dass ein Gurt 112 und einen Gurtaufroller 114 umfasst. Die weiteren Bestandteile des Gurtsystems 110', wie beispielsweise das Gurtschloss oder der das eine Ende des Gurtes 112 befestigende Endbeschlag, sind aus Gründen der Übersichtlichkeit der Erfindung nicht näher im Detail dargestellt. Gurtschloss und Endbeschlag werden über die Montagepunkte 46 am Rahmen 1 des Fahrzeugsitzes 100 befestigt.

Als Personen-Rückhaltesystems 110 kann jedes beliebige System verwendet werden, was geeignet ist, eine Person auf dem Fahrzeugsitz 1 sicher zurückzuhalten. Vorzugsweise wird als Personen-Rückhaltesysteme 110 am Fahrzeugsitz 1 ein als kombinierter Schräg-und Beckengurt ausgebildetes Gurtsystem 110', auch bezeichnet als 3-Punkt-Gurt, eingesetzt. Es können auch andere Gurtsysteme, wie beispielsweise Schulter-Schräggurte oder Beckengurte, bekannt als 2-Punkt-Gurte, verwendet werden.

Wie aus den Fig. 7 ferner ersichtlich, ist der Gurtaufroller 114 an der als Montageplatte 14 ausgebildeten Halterung 12 im Inneren des Rückenlehnabschnittes 4 des Rahmens 1 befestigt. Der Gurt 112 wird über die Ausnehmung 44 an der Oberstrebe 36 aus dem Inneren des Fahrzeugsitzes 100 herausgeführt.

Fig. 9 zeigt ein zweites Ausführungsbeispiel eines Rahmens 1', der einen Sitzabschnitt 2' und einen Rückenlehenabschnitt 4' aufweist. Der Sitzabschnitt 2' und der Rückenlehnenabschnitt 4' sind mit einem Befestigungsabschnitt 5` des Rahmens 1 verbunden. Der Befestigungsabschnitt 5' dient zur Kopplung des Rahmens 1 mit beispielsweise einer in Fig. 5 gezeigten Unterkonstruktion 60, insbesondere mit deren Montageschnittstelle 62.Der Rückenlehnenabschnitt 4' ist in der vorliegend gezeigten Ausführungsform starr mit dem Befestigungsabschnitt 5' verbunden. Der Rückenlehnenabschnitt 4' ist insbesondere einstückig mit dem Befestigungsabschnitt 5' ausgebildet. Rückenlehnenabschnitt 4' und Befestigungsabschnitt 5' sind stoffschlüssig miteinander verbunden.

Entgegen der in den Figuren 1 bis 4 gezeigten Ausgestaltung ist der Sitzabschnitt 2' beweglich am Befestigungsabschnitt 5' angeordnet. Insbesondere die dem Rückenlehnenabschnitt 4` zugewandten Enden der Tragholme 18, 20 am Sitzabschnitt 2` bilden zusammen mit zwei den Verbindungsbereich 21 ausbildenden Versteifungsplatten 48 jeweils ein Schwenklager 50 zum Bewegen des Sitzabschnittes 2' relativ zum Rückenlehnenabschnitt 4' um eine Schwenkachse 51 aus. Der Sitzabschnitt 2` mit seinen Tragholmen 18, 20 und den die Enden der Tragholme 18, 20 miteinander verbindenden Verbindungsstreben 19, 19' bildet ein im Wesentlichen rechteckiges Rahmenteil aus.

Der Rückenlehnenabschnitt 4' weist zwei seitliche im Abstand zueinander angeordnete Stützholme 6, 8 auf, welche in der vorliegend gezeigten Ausführung parallel zueinander verlaufen. Am Stützholm 6 ist, wie aus Fig. 9 ersichtlich, an einer Innenseite des Stützholmes 6 eine Halterung 12 zum Befestigen eines nicht näher gezeigten Gurtaufrollers 114 (Fig. 7) eines Gurtsystems 110' angeordnet.

Wie Fig. 10 zeigt, haben die Stützholme 6, 8 und Tragholme 18, 20 Längsachsen L₁, L₂, welche in einem Winkel β von etwa 100° bis 115° zueinander verlaufen. Zwischen den Stützholmen 6, 8 und den Tragholmen 18, 20 ist ein stumpfer Winkel ausgebildet.

Der Befestigungsabschnitt 5' wird in der vorliegenden Ausführungsform mittels eines waagerecht verlaufenden Profilkörpers 52 ausgebildet, der dazu eingerichtet ist, mit einer Montageschnittstelle 62 einer Unterkonstruktion 60 zusammenzuwirken. Die Stützholme 6, 8 des Rückenlehnenabschnitts 4` können mit der Oberseite des Profilkörpers 52 verbunden sein oder sich bis zur Unterseite des Profilkörpers 52 erstrecken.

Die Stützholme 6, 8, die Tragholme 18, 20, die Verbindungsstreben 19, 19' sowie der Profilkörper 52 können jeweils aus Strangpress-Profilen ausgebildet sein. Zudem kann jedes Strangpress-Profil einen im Inneren des Profils verlaufenden Versteifungssteg zur Ausbildung eines Mehrkammerprofils haben.

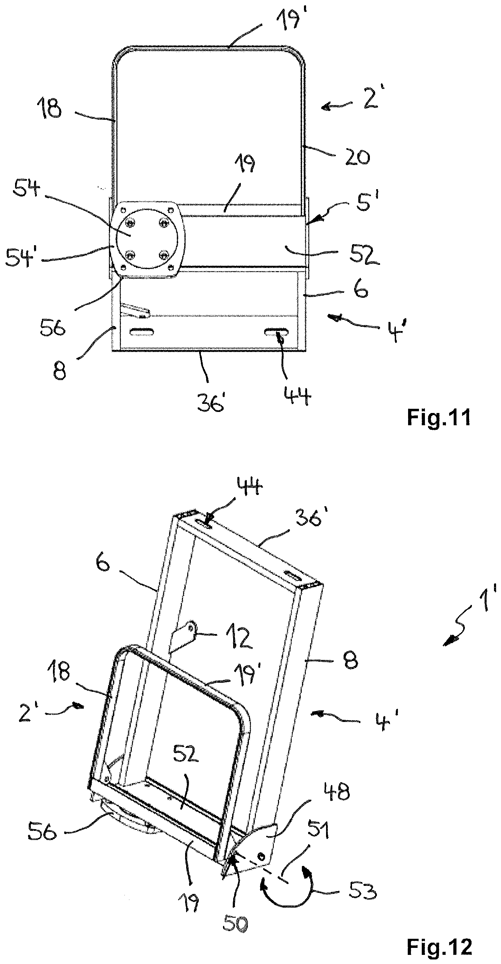

Fig. 11 zeigt den erfindungsgemäßen Rahmen 1' in einer Ansicht von unten, an dessen Unterseite, insbesondere der Unterseite des Profilkörpers 52, ein sich aus zwei Lagerteilen 54, 54' zusammensetzendes Drehlager 56 angeordnet ist. Das Drehlager 56 ist dazu eingerichtet, den Rahmen 1' um eine parallel zu den Stützholmen 6, 8' verlaufende Drehachse 57 zu bewegen. Das Drehlager 56 wird in einer bevorzugten Ausführung zum Befestigen des Rahmens 1' an der Unterkonstruktion 60 verwendet. Insbesondere das Außenlagerteil 54' ist dazu eingerichtet, mit einer Montageschnittstelle 62 an der Unterkonstruktion 60 zusammenzuwirken. Das Außenlagerteil 54' wird vorzugsweise mit der Montageschnittstelle 62 verschraubt.

Wie Fig. 11 zeigt, ist das Drehlager 56 außermittig am Profilkörper 52 und zu den Stützholmen 6, 8 angeordnet. Insbesondere ist das Drehlager 56 an einem der Stützholme 6, 8 zugeordneten Ende des Profilkörpers 52 angeordnet.

Die oberen Enden 11 der Stützholme 6, 8 sind mittels einer Oberstrebe 36' miteinander verbunden. Die Oberstrebe 36 verläuft im Betrieb des Sitzes im Wesentlichen waagerecht. Die Oberstrebe 36' weist mehrere schlitzförmige Ausnehmungen 44 zum Hindurchführen eines Gurtes 112 des Gurtsystems 110' gemäß Fig. 7 auf.

Wie Fig. 12 verdeutlicht, ist der Sitzabschnitt 2' um die Schwenkachse 51 zum Befestigungsabschnitt 5 und damit zur Rückenlehne 4' schwenkbar ausgebildet. In ihrer oberen, verschwenkten Position, gezeigt in Fig. 12, erstreckt sich der Sitzabschnitt 2` im Wesentlichen parallel zu dem Rückenlehnenabschnitt 4`. Der Sitzabschnitt 2' kann angedeutet durch die Doppel-Pfeile 53 beliebig von der in Fig. 12 gezeigten Position in die in Fig. 10 gezeigte Position zur bestimmungsgemäßen Verwendung des Sitzes hin- und hergeschwenkt werden.

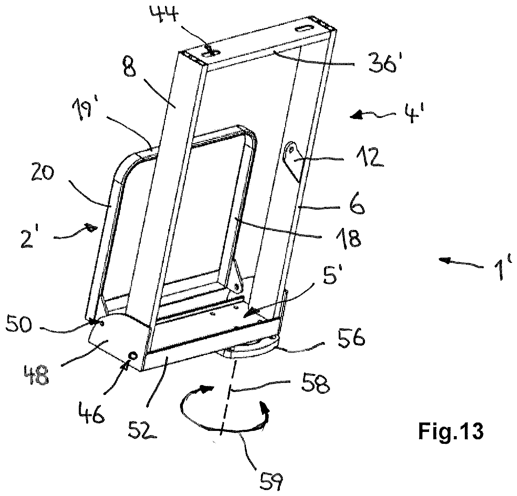

Wie aus Fig. 13 ersichtlich, hat das Drehlager 56 eine Drehachse 58, die insbesondere parallel zur Längsachse L₁ der Stützholme 6, 8 des Rahmens 1' verläuft. Mittels des Drehlagers 56 kann, wie weiterhin durch die in Fig. 13 dargestellten Doppel-Pfeile 59 verdeutlicht, der Rahmen 1' und damit die gesamte Sitzschale des Fahrzeugsitzes 100 aus einer in Fahrtrichtung weisenden Normalposition in eine Transportstellung überführt und wieder in die Normalposition zurückbewegt werden. Dazu wird der Rahmen 1' mit hochgeklapptem Sitzabschnitt 2` um etwa 90° um die Drehachse 58 bewegt.

Der Rahmen 1' weist im Verbindungsberiech 21 der Stützholme 6, 8 mit dem Befestigungsabschnitt 5', insbesondere an den Versteifungsplatten 48 jeweils einen Montagepunkt 46 für zusätzliche am Rahmen 1' zu montierende Teile des Personen-Rückhaltesystem 110 (Fig.7, 8), insbesondere des Gurtsystems 110', auf. Die Abmessungen der Stütz- und Tragholme 6, 8, 18, 20 der zweiten Ausführung sind identisch, zumindest aber ähnlich zu den Abmessungen der ersten Ausführungsform.

Die Erfindung wird ferner anhand der nachfolgenden Ausführungsbeispiele beschrieben:
Ausführungsbeispiel 1. Rahmen (1, 1') für einen Fahrzeugsitz (100), insbesondere für einen Fahrzeugsitz für Menschen mit Beeinträchtigung,
   dadurch gekennzeichnet, dass der Rahmen (1, 1') aus Aluminium oder einer Aluminiumlegierung besteht.
Ausführungsbeispiel 2. Rahmen nach Ausführungsbeispiel 1,
   dadurch gekennzeichnet, dass der Rahmen (1, 1') einen Sitzabschnitt (2, 2`) und einen Rückenlehnenabschnitt (4, 4') aufweist, wobei der Sitzabschnitt (2, 2') vorzugsweise starr mit dem Rückenlehnenabschnitt (4, 4') verbunden ist oder zumindest Teile des Sitzabschnitts (2, 2') beweglich mit dem Rückenlehnenabschnitt (4, 4') verbunden sind.
Ausführungsbeispiel 3. Rahmen nach Ausführungsbeispiel 1 oder 2,
   dadurch gekennzeichnet, dass der Rahmen (1, 1') einen Befestigungsabschnitt (5, 5') zum Befestigen an einer Unterkonstruktion (60) aufweist, wobei der Rückenlehnenabschnitt (4) einstückig mit dem Befestigungsabschnitt (5, 5') ausgebildet ist.
Ausführungsbeispiel 4. Rahmen nach Ausführungsbeispiel 2 oder 3,
   dadurch gekennzeichnet, dass der Rückenlehnenabschnitt (4, 4') zwei seitliche im Abstand zueinander angeordnete die Breite des Rückenlehnenabschnitts (4, 4') definierende Stützholme (6, 8) aufweist.
Ausführungsbeispiel 5. Rahmen nach Ausführungsbeispiel 4,
   dadurch gekennzeichnet, dass die Stützholme (6, 8) schräg zueinander verlaufen, wobei sich deren Abstand in Richtung ihres oberen Endes (11) verringert.
Ausführungsbeispiel 6. Rahmen nach einem der Ausführungsbeispiele 2 bis 5,
   dadurch gekennzeichnet, dass der Sitzabschnitt (2, 2`) zwei seitliche im Abstand zueinander angeordnete die Breite des Sitzabschnitts (2, 2`) definierende Tragholme (18, 20) aufweist.
Ausführungsbeispiel 7. Rahmen nach Ausführungsbeispiel 6,
   dadurch gekennzeichnet, dass die Tragholme (18, 20) im Wesentlichen parallel zueinander verlaufen
Ausführungsbeispiel 8. Rahmen nach einem der Ausführungsbeispiele 6 und 7,
   dadurch gekennzeichnet, dass die Stützholme (6, 8) und Tragholme (18, 20) Längsachsen (L₁, L₂) haben, welche in einem Winkel β von etwa 100° bis 115° zueinander ausgerichtet sind.
Ausführungsbeispiel 9. Rahmen nach einem der Ausführungsbeispiele 6 bis 8,
   dadurch gekennzeichnet, dass die Längsachse (L₂) des Tragholmes (18, 20) im Betrieb des Fahrzeugsitzes (100) im Wesentlichen horizontal angeordnet ist.
Ausführungsbeispiel 10. Rahmen nach einem der Ausführungsbeispiele 6 bis 9,
   dadurch gekennzeichnet, dass der Sitzabschnitt (2) sich quer zu und zwischen den Tragholmen (18, 20) erstreckende Tragstreben (26, 28) zur Ausbildung des Befestigungsabschnittes Q aufweist.
Ausführungsbeispiel 11. Rahmen nach einem der Ausführungsbeispiele 1 bis 9,
   dadurch gekennzeichnet, dass der Sitzabschnitt (2') relativ zum Befestigungsabschnitt (5`) beweglich ist, insbesondere schwenkbar ausgebildet.
Ausführungsbeispiel 12. Rahmen nach einem der Ausführungsbeispiele 1 bis 9 oder 11,
   dadurch gekennzeichnet, dass der Sitzabschnitt (2`) die Enden der Tragholme (18, 20) miteinander verbindende Verbindungsstreben (19, 19') aufweist.
Ausführungsbeispiel 13. Rahmen nach einem der Ausführungsbeispiele 4 bis 12,
   dadurch gekennzeichnet, dass die Stützholme (6, 8) des Rückenlehnenabschnitts (4, 4') sich über die Gesamthöhe H_{G} des Rahmens (1, 1') erstrecken, und jeder Stützholm (6, 8) vorzugsweise an seinem unteren Endbereich (10) entlang einer Längsseite (22) mit einem ersten Ende (24) eines Tragholmes (18, 20) verbunden ist.
Ausführungsbeispiel 14. Rahmen nach einem der Ausführungsbeispiele 4 bis 13,
   dadurch gekennzeichnet, dass die Stützholme (6, 8), die Tragholme (18, 20), die Verbindungsstreben (19, 19`) und/oder Tragstreben (26, 28) jeweils aus Strangpress-Profilen ausgebildet sind.
Ausführungsbeispiel 15. Rahmen nach einem der Ausführungsbeispiele 4 bis 14,
   dadurch gekennzeichnet, dass die Stützholme (6, 8) und/oder Tragholme (18, 20) mindestens einen im Inneren des Profils verlaufenden Versteifungssteg (32) zur Ausbildung eines Mehrkammerprofils aufweist.
Ausführungsbeispiel 16. Rahmen nach einem der Ausführungsbeispiele 3 bis 15,
   dadurch gekennzeichnet, dass am Befestigungsabschnitt (5`) ein Drehlager (56) angeordnet ist, mittels dem der Rahmen (1') um eine parallel zu den Stützholmen (6, 8) verlaufende Drehachse (58) bewegbar ist, und wobei der Befestigungsabschnitt (5`) vorzugsweise als Kopplungspunkt zum Befestigen des Rahmens (1') an der Unterkonstruktion (60) eingerichtet ist.
Ausführungsbeispiel 17. Rahmen nach Ausführungsbeispiel 16,
   dadurch gekennzeichnet, dass das Drehlager (56) am Befestigungsabschnitt (5`) mittig zwischen den Stützholmen (6, 8) oder seitlich in Richtung eines der Stützholme (6, 8) versetzt angeordnet ist.
Ausführungsbeispiel 18. Rahmen nach einem der Ausführungsbeispiele 4 bis 17,
   dadurch gekennzeichnet, dass die Stützholme (6, 8) und/oder Tragholme (18, 20) eine Profilhöhe (P_{S}, P_{T}) und eine Profilbreite (B) haben, wobei das Verhältnis von Profilhöhe (P_{S}, P_{T}) zu Profilbreite (b) entlang wenigstens eines Abschnitts von Stütz- und/oder Tragholme (6, 8, 18, 20) in einem Bereich von etwa 5:1 bis etwa 10:1 liegt.
Ausführungsbeispiel 19. Rahmen nach einem der Ausführungsbeispiele 6 bis 18,
   dadurch gekennzeichnet, dass die Tragholme (18, 20) sich von ihrem ersten Ende (24) in Richtung ihres zweiten Endes (34) in der Höhe keilförmig verjüngen, wobei die Profilhöhe (P_{T}) am ersten Ende vorzugsweise mindestens doppelt so groß ist, wie die Profilhöhe (P_{T}) am zweiten Ende.
Ausführungsbeispiel 20. Rahmen nach Ausführungsbeispiel 19,
   dadurch gekennzeichnet, dass an den Tragholmen (18, 20) an der Oberseite zum Erzeugen der Keilform Abschnitte der Tragholme (18, 20) abgetrennt sind, wodurch ein zumindest teilweise offenes Profil ausgebildet ist.
Ausführungsbeispiel 21. Rahmen nach einem der Ausführungsbeispiele 4 bis 20,
   dadurch gekennzeichnet, dass die Stützholme (6, 8) in Richtung ihres oberen Endes (11) eine sich verringernde Profilhöhe aufweisen.
Ausführungsbeispiel 22. Rahmen nach einem der Ausführungsbeispiele 10 bis 21,
   dadurch gekennzeichnet, dass die Tragstreben (26, 28) ein Rechteckprofil aufweisen, wobei die Unterseite der Tragstreben (26, 28) vorzugsweise an der Unterkante der Tragholme (18, 20) vorsteht.
Ausführungsbeispiel 23. Rahmen nach einem der Ausführungsbeispiele 4 bis 22,
   dadurch gekennzeichnet, dass der Rahmen (1) eine die Stützholme (6, 8) an ihren oberen Enden (11) miteinander verbindende Oberstrebe (36, 36`) aufweist.
Ausführungsbeispiel 24. Rahmen nach Ausführungsbeispiel 23,
   dadurch gekennzeichnet, dass die Oberstrebe (36) einteilig und entlang ihrer Längsachse wenigstens abschnittsweise gebogen ist.
Ausführungsbeispiel 25. Rahmen nach Ausführungsbeispiel 23 oder 24,
   dadurch gekennzeichnet, dass die Oberstrebe (36, 36`) aus Vollmaterial ausgebildet ist und wenigstens eine Ausnehmung (42, 44) aufweist.
Ausführungsbeispiel 26. Rahmen nach einem der Ausführungsbeispiele 23 bis 25,
   wobei die Oberstrebe (36, 36`) mehrere, vorzugsweise schlitzförmige, Ausnehmungen (42, 44) zum Hindurchführen eines Gurtes (112) eines Gurtsystems (110') oder zum Aufnehmen einer Kopfstütze aufweist.
Ausführungsbeispiel 27. Rahmen nach einem der Ausführungsbeispiele 1 bis 26,
   dadurch gekennzeichnet, dass der Rahmen (1, 1'), bevorzugt der Rückenlehnenabschnitt (4), Halterungen (12) bzw. Montagepunkte (46) für ein Personen-Rückhaltesystem, insbesondere ein Gurtsystem (110'), aufweist, wobei an mindestens einem Stützholm (6, 8) des Rückenlehnenabschnitts (4) auf seiner einem weiteren Stützholm zugewandten Innenseite eine Halterung (12) zum Befestigen des Personen-Rückhaltesystems, insbesondere eines Gurtaufrollers (114) eines Gurtsystems (110') angeordnet ist.
Ausführungsbeispiel 28. Rahmen nach einem der Ausführungsbeispiele 4 bis 27,
   dadurch gekennzeichnet, dass am unteren Ende (10) wenigstens eines Stützholmes (6, 8), vorzugsweise beider Stützholme, ein Montagepunkt (46) für zusätzliche Teile eines/des Personen-Rückhaltesystems, insbesondere Gurtsystems (110') ausgebildet ist.
Ausführungsbeispiel 29. Unterkonstruktion (60) zum Aufnehmen eines Rahmens (1) für einen Fahrzeugsitz (100), insbesondere eines Rahmens (1, 1') nach einem der Ausführungsbeispiele 1 bis 28, und zum reversibel lösbaren Koppeln an einer Fahrzeugstruktur, dadurch gekennzeichnet, dass die Unterkonstruktion (60) zumindest teilweise oder vollständig aus Aluminium oder einer Aluminiumlegierung besteht.
Ausführungsbeispiel 30. Unterkonstruktion nach Ausführungsbeispiel 29,
   dadurch gekennzeichnet, dass die Unterkonstruktion (60) mindestens eine mit dem Rahmen (1, 1'), vorzugsweise mit den Tragstreben (26, 28) des Rahmens (1, 1'), in Wirkverbindung bringbare Montageschnittstelle (62) aufweist.
Ausführungsbeispiel 31. Unterkonstruktion nach Ausführungsbeispiel 29 oder 30, aufweisend mehrere, insbesondere vier, Stützstreben (68, 68`), welche jeweils mit einem ersten Enden (60) mit der Montageschnittstelle (62) verbunden sind und an ihren entgegensetzten Enden (72) jeweils Befestigungsmittel (74, 76) zum Koppeln und Entkoppeln der Unterkonstruktion (60) an und von der Fahrzeugstruktur aufweisen.
Ausführungsbeispiel 32. Fahrzeugsitz (100) für den Transport von Personen, mit einem Rahmen (1, 1') nach einem der Ausführungsbeispiele 1 bis 28, und
   einer Unterkonstruktion (60) nach einem der Ausführungsbeispiele 29 bis 31, und vorzugsweise einem am Rahmen (1) befestigten Gurtsystem (110').
Ausführungsbeispiel 33. Verwendung eines Rahmens (1, 1') an einem Fahrzeugsitz (100) eines Kraftfahrzeugs, wobei der Rahmen (1, 1') nach einem der Ausführungsbeispiele 1 bis 28 ausgebildet ist.
Ausführungsbeispiel 34. Rahmen (1, 1') für einen Fahrzeugsitz (100), insbesondere für einen Fahrzeugsitz für Menschen mit Beeinträchtigung,
   wobei der Rahmen (1, 1') einen Sitzabschnitt (2, 2') und einen Rückenlehnenabschnitt (4, 4') aufweist, wobei der Sitzabschnitt (2, 2`) und der Rückenlehnenabschnitt (4, 4') miteinander verbunden sind, dadurch gekennzeichnet, dass der Rahmen (1, 1') aus Aluminium oder einer Aluminiumlegierung besteht.

Hinsichtlich möglicher Ausgestaltungen des Rahmens (1, 1') gemäß Ausführungsbeispiel 34 wird auf die zu den Ausführungsbeispielen 2 bis 28 genannten Ausführungen bzw. Weiterbildungen Bezug genommen.

### Bezugszeichenliste

- 1, 1': Rahmen
- 2, 2': Sitzabschnitt
- 4, 4': Rückenlehnenabschnitt
- 5, 5`: Befestigungsabschnitt
- 6, 8: Stützholm
- 10: unteres Ende
- 11: oberes Ende
- 12: Halterung
- 14: Montageplatte
- 16: Durchbruch
- 18, 20: Tragholm
- 19, 19': Verbindungsstreben
- 21: Verbindungsbereich
- 22: Längsseite
- 24: erstes Ende
- 26, 28: Tragstrebe
- 30: Unterseite
- 30': Unterkante
- 32: Versteifungssteg
- 34: zweites Ende
- 36, 36`: Oberstrebe
- 38: Mittenabschnitt
- 40, 40': Endabschnitt
- 42, 44: Ausnehmung
- 46: Montagepunkt
- 48: Versteifungsplatten
- 50: Schwenklager
- 51: Schwenkachse
- 52: Profilkörper
- 53: Doppel-Pfeil
- 54: Innenlagerteil
- 54`: Außenlagerteil
- 56: Drehlager
- 58: Drehachse
- 59: Doppel-Pfeil
- 60: Unterkonstruktion
- 62: Montageschnittstelle
- 64: Haltestreben
- 66, 66`: Befestigungsbügel
- 68, 68': Stützstrebe
- 70: erstes Ende
- 72: zweites Ende
- 74, 76: Befestigungsmittel
- 78: Koppelstrebe
- 100: Fahrzeugsitz
- 110: Personen-Rückhaltesystem
- 110': Gurtsystem
- 112: Gurt
- 114: Gurtaufroller
- L_{S}: Längenmaß Stützholm
- L_{T}: Längenmaß Tragholm
- L₁, L₂: Längsachse
- α, β: Winkel
- Hs: Profilhöhe Stützholm
- H_{T}: Profilhöhe Tragholm
- B: Profilbreite
- H_{G}: Gesamthöhe Sitz

## Patentansprüche

**1.** Rahmen (1, 1') für einen Fahrzeugsitz (100), insbesondere für einen Fahrzeugsitz für Menschen mit Beeinträchtigung,
wobei der Rahmen (1, 1') einen Sitzabschnitt (2, 2') und einen Rückenlehnenabschnitt (4, 4') aufweist, wobei der Sitzabschnitt (2, 2`) und der Rückenlehnenabschnitt (4, 4') miteinander verbunden sind,
**dadurch gekennzeichnet, dass** der Rahmen (1, 1') aus Aluminium oder einer Aluminiumlegierung besteht, und
der Rahmen (1, 1') Halterungen (12) bzw. Montagepunkte (46) für ein Personen-Rückhaltesystem (110), insbesondere ein Gurtsystem (110'), aufweist.

**2.** Rahmen nach Anspruch 1,
**dadurch gekennzeichnet, dass** der Sitzabschnitt (2, 2`) starr mit dem Rückenlehnenabschnitt (4, 4') verbunden ist oder zumindest Teile des Sitzabschnitts (2, 2') beweglich mit dem Rückenlehnenabschnitt (4, 4') verbunden sind.

**3.** Rahmen nach Anspruch 1 oder 2,
**dadurch gekennzeichnet, dass** der Rahmen (1, 1') einen Befestigungsabschnitt (5, 5') zum Befestigen an einer Unterkonstruktion (60) aufweist, wobei der Rückenlehnenabschnitt (4) einstückig mit dem Befestigungsabschnitt (5, 5') ausgebildet ist.

**4.** Rahmen nach Anspruch 1 bis 3,
**dadurch gekennzeichnet, dass** der Rückenlehnenabschnitt (4, 4') zwei seitliche im Abstand zueinander angeordnete die Breite des Rückenlehnenabschnitts (4, 4') definierende Stützholme (6, 8) aufweist, und/oder
der Sitzabschnitt (2, 2`) zwei seitliche im Abstand zueinander angeordnete die Breite des Sitzabschnitts (2, 2`) definierende Tragholme (18, 20) aufweist.

**5.** Rahmen nach Anspruch 4,
**dadurch gekennzeichnet, dass** der Sitzabschnitt (2) sich quer zu und zwischen den Tragholmen (18, 20) erstreckende Tragstreben (26, 28) zur Ausbildung des Befestigungsabschnittes Q aufweist.

**6.** Rahmen nach Anspruch 4 oder 5,
**dadurch gekennzeichnet, dass** die Stützholme (6, 8) des Rückenlehnenabschnitts (4, 4') sich über die Gesamthöhe H_{G} des Rahmens (1, 1') erstrecken, und jeder Stützholm (6, 8) vorzugsweise an seinem unteren Endbereich (10) entlang einer Längsseite (22) mit einem ersten Ende (24) eines Tragholmes (18, 20) verbunden ist, und/oder dass die Stützholme (6, 8) und/oder Tragholme (18, 20) mindestens einen im Inneren des Profils verlaufenden Versteifungssteg (32) zur Ausbildung eines Mehrkammerprofils aufweist.

**7.** Rahmen nach einem der Ansprüche 3 bis 6,
**dadurch gekennzeichnet, dass** am Befestigungsabschnitt (5`) ein Drehlager (56) angeordnet ist, mittels dem der Rahmen (1') um eine parallel zu den Stützholmen (6, 8) verlaufende Drehachse (58) bewegbar ist, und wobei der Befestigungsabschnitt (5`) vorzugsweise als Kopplungspunkt zum Befestigen des Rahmens (1') an der Unterkonstruktion (60) eingerichtet ist,
wobei vorzugsweise das Drehlager (56) am Befestigungsabschnitt (5`) mittig zwischen den Stützholmen (6, 8) oder seitlich in Richtung eines der Stützholme (6, 8) versetzt angeordnet ist.

**8.** Rahmen nach einem der Ansprüche 64 bis 7,
**dadurch gekennzeichnet, dass** die Tragholme (18, 20) sich von ihrem ersten Ende (24) in Richtung ihres zweiten Endes (34) in der Höhe keilförmig verjüngen, wobei die Profilhöhe (P_{T}) am ersten Ende vorzugsweise mindestens doppelt so groß ist, wie die Profilhöhe (P_{T}) am zweiten Ende,
wobei vorzugsweise Abschnitte an den Oberseiten der Tragholmen (18, 20) zum Erzeugen der Keilform abgetrennt sind, wodurch ein zumindest teilweise offenes Profil ausgebildet ist.

**9.** Rahmen nach einem der Ansprüche 5 bis 8,
**dadurch gekennzeichnet, dass** die Tragstreben (26, 28) ein Rechteckprofil aufweisen, wobei die Unterseite der Tragstreben (26, 28) vorzugsweise an der Unterkante der Tragholme (18, 20) vorsteht.

**10.** Rahmen nach einem der Ansprüche 1 bis 9,
**dadurch gekennzeichnet, dass** an mindestens einem Stützholm (6, 8) des Rückenlehnenabschnitts (4) auf seiner einem weiteren Stützholm zugewandten Innenseite eine Halterung (12) zum Befestigen des Personen-Rückhaltesystems, insbesondere eines Gurtaufrollers (114) eines Gurtsystems (110') angeordnet ist, und/oder
dass an einem unteren Ende (10) wenigstens eines Stützholmes (6, 8), vorzugsweise beider Stützholme, ein Montagepunkt (46) für zusätzliche Teile des Personen-Rückhaltesystems, insbesondere Gurtsystems (110'), ausgebildet ist

**11.** Rahmen nach einem der Ansprüche 4 bis 10,
**dadurch gekennzeichnet, dass** der Rahmen (1, 1') eine die Stützholme (6, 8) an ihren oberen Enden (11) miteinander verbindende Oberstrebe (36, 36`) aufweist,
wobei die Oberstrebe (36, 36') vorzugsweise
- einteilig und entlang ihrer Längsachse wenigstens abschnittsweise gebogen ist und/oder
- aus Vollmaterial ausgebildet ist und wenigstens eine Ausnehmung (42, 44) aufweist, und/oder
- mehrere, vorzugsweise schlitzförmige, Ausnehmungen (42, 44) zum Hindurchführen eines Gurtes (112) eines Gurtsystems (110') oder zum Aufnehmen einer Kopfstütze aufweist.

**11.** Rahmen nach einem der Ansprüche 4 bis 10,
**dadurch gekennzeichnet, dass** an mindestens einem der Stützholme (6, 8) auf seiner dem weiteren Stützholm zugewandten Innenseite eine Halterung (12) zum Befestigen eines Gurtaufrollers (114) eines Gurtsystems (110') angeordnet ist.

**12.** Unterkonstruktion (60) zum Aufnehmen eines Rahmens (1) für einen Fahrzeugsitz (100), insbesondere eines Rahmens (1, 1') nach einem der Ansprüche 1 bis 11, und zum reversibel lösbaren Koppeln an einer Fahrzeugstruktur,
**dadurch gekennzeichnet, dass** die Unterkonstruktion (60) zumindest teilweise oder vollständig aus Aluminium oder einer Aluminiumlegierung besteht.

**13.** Unterkonstruktion nach Anspruch 12,
**dadurch gekennzeichnet, dass** die Unterkonstruktion (60) mindestens eine mit dem Rahmen (1, 1'), vorzugsweise mit den Tragstreben (26, 28) des Rahmens (1, 1'), in Wirkverbindung bringbare Montageschnittstelle (62) aufweist.

**14.** Unterkonstruktion nach Anspruch 12 oder 13,
aufweisend mehrere, insbesondere vier, Stützstreben (68, 68`), welche jeweils mit einem ersten Enden (60) mit der Montageschnittstelle (62) verbunden sind und an ihren entgegensetzten Enden (72) jeweils Befestigungsmittel (74, 76) zum Koppeln und Entkoppeln der Unterkonstruktion (60) an und von der Fahrzeugstruktur aufweisen.

**15.** Fahrzeugsitz (100) für den Transport von Personen, mit
einem Rahmen (1, 1') nach einem der Ansprüche 1 bis 11, und
einem am Rahmen (1), insbesondere am Rückenlehnenabschnitt (4), befestigten Personen-Rückhaltesystem (110), vorzugsweise Gurtsystem (110').

**16.** Fahrzeugsitz (100) nach Anspruch 15,
mit einer Unterkonstruktion (60) nach einem der Ansprüche 12 bis 14.
